# EUROPEAN PATENT APPLICATION

(11) **EP 4 801 013 A1**
(43) Date of publication of application: **02.09.2026**
(21) Application number: 26159306.5
(22) Date of filing: 18.02.2026
(51) Int. Cl.: H04L 67/141, H04L 47/34, H04L 69/324

(54) **COMMUNICATION METHOD AND RELATED APPARATUS**

(30) Priority: 27.02.2025 CN 202510238238
(71) Applicant: HUAWEI TECHNOLOGIES CO., LTD., Shenzhen 518129 (CN)
(72) Inventor: Qu, Xiangfeng, Shenzhen, Guangdong, 518129 (CN); Jiang, Heng, Shenzhen, Guangdong, 518129 (CN); Cheng, Chuanning, Shenzhen, Guangdong, 518129 (CN)
(74) Representative: MERH-IP Matias Erny Reichl Hoffmann Patentanwälte PartG mbB

(57) **Abstract**

Embodiments of this application provide a communication method and a related apparatus. The method includes: sending a first data segment, a connection identifier, and a first segment sequence number, where the first data segment is a data segment in a first data stream, the connection identifier indicates a second device to apply for a first context, the first context is used to record the first segment sequence number, the first segment sequence number is a segment sequence number of the first data segment, and the second device is a device connected to a first device through a physical link; and receiving a first response message, where the first response message is provided by the second device, the first response message includes first description information, and the first description information describes a correspondence between the first context and the first data stream. This application can reduce transmission latency of data streams.

## Description

### TECHNICAL FIELD

This application relates to the field of communication technologies, and in particular, to a communication method and a related apparatus.

### BACKGROUND

In communication technologies, a source and a destination collaboratively complete a task by transmitting multiple data streams, each including multiple pieces of data that are sequentially processed. The destination records an order of the data in the data stream based on a context, to sequentially process the data in the data stream.

The source needs to negotiate with the destination, to determine the context to be used. The negotiation process includes: The source sends a connection request, and the destination receives the connection request and feeds back corresponding context-related information. After receiving the corresponding context-related information, the source determines that a connection succeeds, and starts to transmit data streams.

In the foregoing implementation, the negotiation process incurs extra time, and the source needs to wait for a period of time before starting transmission of data streams, resulting in a high communication latency.

### SUMMARY

A first aspect of this application provides a communication method and a related apparatus, to reduce a delay of transmitting a data stream.

According to a first aspect, this application provides a communication method. The communication method may be applied to one or more computing devices in a computing cluster like a data center, cloud computing, high-performance computing, or distributed storage. The computing device in the computing cluster may be referred to as a first device when serving as a source, and may be referred to as a second device when serving as a destination, the source is an end that sends a data stream, and the destination is an end that receives the data stream. The data stream includes multiple data segments, and the data segments are data segments obtained by segmenting large data (data stream). The first device may separately send the multiple data segments to send the data stream, the second device may separately receive the multiple data segments to receive the data stream, and the second device may process the data segments in an order of segment sequence numbers of the data segments in the data stream.

In the first aspect of this application, the communication method is applied to the first device, and the method includes: sending a first data segment, a connection identifier, and a first segment sequence number, where the first data segment is a data segment in a first data stream, the connection identifier indicates the second device to apply for a first context, the first context is used to record the first segment sequence number, and the second device is a device connected to the first device through a physical link; and receiving a first response message, where the first response message is provided by the second device, the first response message includes first description information, and the first description information describes a correspondence between the first context and the first data stream.

The first data stream is a data sequence including multiple data segments. The first data segment may be any data segment in the first data stream. For example, the first data stream includes M data segments, and the first data segment may be an N^{th} data segment in the M data segments, where N is greater than or equal to 1, N is less than or equal to M, and M is greater than or equal to 2. A segment sequence number (segment sequence number, SSN) is used to identify a location or an order of a data segment in a data stream, and the data segments in the data stream may be sequentially processed based on segment sequence numbers. A segment sequence number of the first data segment is referred to as the first segment sequence number or a first SSN. The connection identifier is an indicator that indicates the second device to apply for the first context. Alternatively, the connection identifier may be used to trigger the second device to apply for the first context, record the first SSN in the first context, and send the first description information to the first device. All these steps may be considered as being indicated by the connection identifier. It may alternatively be understood that the connection identifier indicates to request the second device to set up a connection and provide a resource related to the connection for the first device. The resource related to the connection is, for example, information that needs to be used by both the first device and the second device in the connection, for example, the first description information. When obtaining the first context through application based on the connection identifier, the second device may provide the first response message, where the first response message includes the first description information. The first description information can reflect the correspondence between the first context and the first data stream. The first description information is, for example, an identifier of the first context, or reference information corresponding to an identifier of the first context. Alternatively, the first context may be directly used as the first description information. The first device may determine, based on the provided first description information, which context of the second device is used to record the SSN of the data segment in the first data stream. Provided that the first description information is carried when the first device sends a subsequent data segment in the first data stream and an SSN, the second device can determine, based on the first description information, that the data segment is still a data segment in the first data stream, to record the SSN in the first context. Therefore, an order of the data segments may be further determined based on SSNs recorded in the first context. After the first device receives the first response message, the connection identifier is no longer carried when the first device sends a subsequent data segment in the first data stream.

In the first aspect, the first device sends the connection identifier, so that the second device applies for the first context; and receives the first description information provided by the second device. The first description information can describe the correspondence between the first context and the first data stream that the first device needs to send. Therefore, the first description information can be used as a reference basis for sending the first data stream by the first device, and the second device can determine, based on the first description information, the first context corresponding to the first data stream. In addition, when sending the connection identifier, the first device sends the first data segment and the first segment sequence number, so that some data of the first data stream can be transmitted without waiting for the second device to feed back the response message indicating that the context is successfully obtained through application. Because there is no extra waiting time, a delay of transmitting the data stream can be reduced.

In a possible implementation, after receiving the first response message, the method further includes:
sending a release packet, where the release packet includes the first description information and a release identifier, and the release identifier indicates the second device to release the first context.

To fully use context resources of the second device, the first device may send the release packet when the first context does not need to be used. Therefore, the second device releases the first context. When transmission of the first data stream is completed, the first device no longer needs to occupy the first context. In this case, the first device may send the release packet. The release packet includes the first description information, to indicate which context (namely, the first context) needs to be processed by the second device. The release identifier indicates that performed processing is release. After the first context is released, the second device no longer records an SSN of a data segment in the first data stream. The release packet may include a last unsent data segment in the first data stream. If the last data segment is large, and one release packet is insufficient to carry the complete data segment, the data segment may be carried in multiple release packets. Alternatively, the first device may send the release packet after the data segments in the first data stream are sent. In this case, the release packet does not include a payload (does not include a data segment).

In the foregoing possible implementation, the release packet is sent, to release the context resources, and fully use the context resources.

In a possible implementation, before receiving the first response message, the method further includes:
receiving a second response message, where the second response message is sent by the second device when the second device fails to obtain the first context through application, and the second response message does not include the first description information; and
sending a second data segment, the connection identifier, and a second segment sequence number, where the second data segment is an unsent data segment in the first data stream, the first context is further used to record the second segment sequence number, and the second segment sequence number is a segment sequence number of the second data segment.

If the second device fails to obtain the first context through application, the second device may feed back the second response message. If determining that the second response message does not include the first description information, the first device resends the connection identifier. When the connection identifier is resent, both the second data segment and the second segment sequence number may be sent synchronously. In this data transmission process, the first device does not need to wait for the second device to successfully obtain the first context through application, to effectively use a time of this data transmission, and reduce a data transmission delay. In addition, the connection identifier is resent, so that the second device attempts to apply for the first context again. This can effectively improve a context application success rate. When successfully obtaining the first context through application, the second device records the second segment sequence number in the first context, and may subsequently process corresponding data segments based on the first segment sequence number and the second segment sequence number that are recorded in the first context. After the second data segment is sent, if the second device obtains the first context through application, the second device may provide the first response message. The first device receives the first response message, and sends, based on the first description information in the first response message, an unsent data segment in the first data stream. In addition, when the unsent data segment in the first data stream is subsequently sent, the connection identifier is not sent. After sending the first data segment and before receiving the first response message, the first device may receive, for multiple times, response messages that do not include the first description information. Each time the first device receives the response message that does not include the first description information, the first device synchronously sends the connection identifier, an unsent data segment, and a segment sequence number. A reason why the second device fails to obtain a context through application may be that the context resources of the second device are limited, and there is no idle context temporarily when the first device sends a connection identifier. However, because a used context may return to an idle state after being released, after the first device resends the connection identifier and the second device receives the connection identifier, there may be an idle context, and the first context may be applied for.

In the foregoing possible implementation, when the response message that does not include the first description information is received, the connection identifier is resent, to improve a success rate of applying for the context and setting up the connection. The data segment and the segment sequence number are sent together with the connection identifier, so that the data segments in the data stream may continue to be sent. The first device does not need to wait, to reduce a data transmission delay, and avoid a case in which the first device cannot continuously send the first data stream.

In a possible implementation, before sending the first data segment, the method further includes:
setting up a reliable transport connection, where the reliable transport connection is a reliable connection between a transport layer of the first device and a transport layer of the second device, and the reliable transport connection is used to send the first data segment, the connection identifier, and the first segment sequence number or receive the first response message.

The transport layer is configured to send data provided by an upper-layer application, for example, send the first data segment, the connection identifier, and the first segment sequence number; and is further configured to receive data provided by a transport layer of another device. Before sending data, the transport layer of the first device first sets up a connection, and sends the data through the set-up connection. To improve data sending reliability, the connection may be a reliable connection. In the reliable connection, the first device acknowledges, based on an acknowledgment fed back by the second device, that the second device successfully receives the data. If the second device does not successfully receive the data, the first device may retransmit the unreceived data, for example, the first data segment, the connection identifier, and the first segment sequence number. In the reliable connection, traffic control may be further performed, so that the data is sent at a specific rate; or congestion control may be further performed, to prevent excessive data from being transmitted to a network. A process of setting up the reliable transport connection depends on a used transport (transport, TP) layer protocol, for example, a transmission control protocol or another transport layer communication protocol.

In this possible implementation, the first data segment, the connection identifier, and the first segment sequence number are sent through the set-up reliable transport connection, or the first response message is received through the reliable transport connection, to improve data transmission reliability.

In a possible implementation, the first device includes a transaction layer used to transfer data to the transport layer of the first device, the data transferred by the transaction layer to the transport layer of the first device includes the first data segment, the connection identifier, and the first segment sequence number, the transport layer of the first device is configured to include the first data segment, the connection identifier, and the first segment sequence number in multiple first packets, and there is one packet in the multiple first packet includes the connection identifier.

The first device includes the transaction layer and the transport layer. The transaction layer may obtain the first data stream from the upper-layer application, obtain the first data segment through segmentation, configure the corresponding first segment sequence number, and provide the connection identifier. The transaction layer provides, for the transport layer, the data segment, the SSN, or the connection identifier that needs to be transmitted, and the transport layer encapsulates the data segment, the SSN, or the connection identifier into the multiple packets for sending. Multiple transaction layers may share one transport layer. To prevent a data stream at one transaction layer from occupying a transport connection for a long time, when the transaction layers send the data stream to the transport layer, the data stream is segmented into multiple data segments, and one transaction layer sends only one segment to the transport layer each time. In this way, the transport layer may transmit the data segments at the multiple transaction layers. When the transport layer carries the data provided by the transaction layer in the multiple first packets, each first packet may include a part of data content of the first data segment and include the first segment sequence number. In addition, because the second device needs to apply for one first context, one connection identifier is sent. Only there is one packet in the multiple first packet includes the connection identifier, and the first packet includes one connection identifier. The second device correspondingly applies for one first context based on one connection identifier.

In this possible implementation, the multiple first packets are transmitted at the transport layer, and a large first data segment may be transmitted. In addition, layering between the transaction layer and the transport layer may enable the transport layer to focus on the reliable connection. The transaction layer is responsible for communicating with the upper-layer application, the transaction layer may provide corresponding transmission in advance, and data is transmitted through the reliable transport connection in time, to improve data transmission efficiency.

In a possible implementation, the first device includes multiple first ports, the multiple first ports are separately connected to second ports of the second device through different transmission paths, the multiple transmission paths include a first transmission path, and the first transmission path is used to send the first data segment, the connection identifier, and the first segment sequence number or receive the first response message.

The first device includes the multiple first ports, and the multiple transmission paths may be set up through the multiple first ports. One first port corresponds to one transmission path, and the other end of each transmission path is the second port of the second device, to increase network bandwidth. The first device may construct the first port by using software, and set up the transmission path by using the software. The multiple transmission paths include at least one first transmission path that is used to send at least one first packet, where the at least one first packet includes the first data segment, the connection identifier, and the first segment sequence number; or receive the first response message. An identifier of the first port may be recorded in a first port mapping table, and the first device determines the first port according to the first port mapping table, and sets up the transmission path. After sending of the first data stream is completed, the first transmission path may be disconnected. In this case, the first port may be configured to transmit another data stream.

In this possible implementation, the multiple transmission paths may be set up through the multiple ports, and data is transmitted in parallel on the multiple transmission paths, to increase network bandwidth. When a transmission path is overloaded, data can be normally transmitted on another transmission path.

In a possible implementation, multiple processes of the first device include one first process, the first process is used to send the first data stream to a second process, and the second process is a process of the second device.

The process is created by a program of the first device, for example, created by an operating system. The program of the first device communicates, by creating the first process, with the second process created by a program of the second device. The program of the first device may communicate with a specific process of the second device through a connection between the processes, to transmit specific data streams. When sending data, the first process may transmit the data at the transport layer through the first port of the first device, and send the data through the connection at the transport layer.

In this possible implementation, the first device sends the first data stream to the second process of the second device by using the first process, to efficiently transmit the data stream.

In a possible implementation, the method further includes:
determining a data transmission mode indicated by a first application of the first device; and
if the data transmission mode is a first mode, performing the step of sending the first data segment; or
if the data transmission mode is a second mode, sending the first data stream based on second description information, where the second description information indicates a correspondence between a preset context and the first data stream, the preset context is a context obtained through negotiation with the second device in advance, and the preset context is used to record segment sequence numbers of multiple data segments in the first data stream.

The first application is an application used by the first device to send the first data stream. When the first application needs to transmit the first data stream, a data transmission mode may be specified. The data transmission mode includes the first mode or the second mode. The first mode is a mode in which data is transmitted through a dynamic connection (a connection that is dynamically set up or dynamically disconnected). In the first mode, the first device dynamically (temporarily) sends the connection identifier to the second device, to indicate the second device to apply for a temporary first context. The first context is dynamically released by the second device after usage, to dynamically use context resources can bed, and improve resource usage efficiency. In the second mode, when sending the first data stream, the first device does not temporarily apply for a context, but sends the first data stream based on a context obtained through negotiation with the second device in advance. The first device negotiates with the second device in advance about a context, namely, a preset context, that needs to be used for a long time. In a negotiation process, the second device provides the second description information, where the second description information may be an identifier of the preset context or the preset context; and uses, for a long time, the preset context obtained through application. In the second mode, because the preset context has been obtained through negotiation in advance, when sending the multiple data segments in the first data stream, the first device may directly and continuously send the multiple data segments, and does not need to wait for the second device to acknowledge that the context is obtained through application.

In this possible implementation, the first data stream is sent in the data transmission mode specified by the first application, to flexibly switch a manner of sending the first data stream.

In a possible implementation, at least one data segment in the first data stream is carried in a packet with a strict order, and the strict order indicates the second device to process the data segment based on a segment sequence number included in the packet.

In the multiple data segments in the first data stream, not all the data segments have a strict order relationship. For example, in the multiple data segments, only one specific data segment is ordered after the other data segments. In this case, a strict order may be carried in the specific data segment during sending, and indicate the second device to sequentially process the specific data segment, and an order of the other data segments is determined by the second device, to flexibly control an order of the data segments in the first data stream.

According to a second aspect, this application provides a communication method, applied to a second device. The method includes:
receiving a first data segment, a connection identifier, and a first segment sequence number, where the first data segment is a data segment in a first data stream, the connection identifier indicates the second device to apply for a first context, the first context is used to record the first segment sequence number, the first segment sequence number is a segment sequence number of the first data segment, and a first device is a device connected to the second device through a physical link; and
sending a first response message, where the first response message includes first description information, and the first description information describes a correspondence between the first context and the first data stream.

In the second aspect, after receiving the connection identifier provided by the first device, the second device applies for the first context, provides the first description information for the first device, and describes the correspondence between the first context and the first data stream based on the first description information. Subsequently, the first device may send data segments in the first data stream based on the first description information. When receiving the connection identifier, the second device further receives the first data segment and the first segment sequence number, and may record the first segment sequence number in the first context, to determine an order of the first data segment. When the first data stream is subsequently received, because the first data segment has been received, this reduces a data amount of data segments that need to be received subsequently, and reduces a delay of receiving the first data stream.

In a possible implementation, after sending the first response message, the method further includes:
receiving a release packet, where the release packet includes the first description information and a release identifier; and
releasing the first context based on the first description information and the release identifier.

In this possible implementation, the second device may release the first context in time based on the release packet of the first device. After being released, the first context may be used to record a segment sequence number of a data segment in another data stream, to fully use limited context resources of the second device.

In a possible implementation, after sending the first response message, the method further includes:
if the first context is not used after timeout, releasing the first context.

In this possible implementation, if the first context is not used after timeout, the first context is not fully used, and the limited context resources can be fully used by releasing the first context.

In a possible implementation, before sending the first response message, the method further includes:
sending a second response message, where the second response message is sent by the second device when the second device fails to obtain the first context through application, and the second response message does not include the first description information; and
receiving a second data segment, the connection identifier, and a second segment sequence number, where the second data segment is an unreceived data segment in the first data stream, the first context is further used to record the second segment sequence number, and the second segment sequence number is a segment sequence number of the second data segment.

In this possible implementation, after receiving the connection identifier, the second device may temporarily have no idle context resource, and consequently cannot apply for the first context. In this case, the second device may feed back, to the first device, a response message that does not include the first description information, and the first device may attempt to resend the connection identifier. Because the context resources of the second device are dynamically allocated and released, an idle context may already exist when the second device receives the connection identifier again. Therefore, the first context may be allocated, and the response message including the first description information is provided for the first device. In this way, the first data stream can be normally received, and a data stream transmission delay is reduced.

In a possible implementation, before receiving the first data segment, the method further includes:
setting up a reliable transport connection, where the reliable transport connection is a reliable connection between a transport layer of the first device and a transport layer of the second device, and the reliable transport connection is used to receive the first data segment, the connection identifier, and the first segment sequence number or send the first response message.

In this possible implementation, the second device receives the first data segment, the connection identifier, and the first segment sequence number or sends the first response message through the reliable transport connection, to improve data transmission reliability.

In a possible implementation, the transport layer of the second device is configured to receive multiple first packets, and send the first data segment, the connection identifier, and the first segment sequence number that are included in the multiple first packets to a transaction layer of the second device, where there is one packet in the multiple first packet includes the connection identifier.

In this possible implementation, the first data segment is large and is carried in the multiple first packets. The second device obtains the complete first data segment, the first segment sequence number, and the connection identifier by receiving the multiple first packets. The second device may identify, based on a first segment sequence number in each first packet, that a data segment included in the first packet is a part of the first data segment, and obtain the complete first data segment through combination. In addition, the second device correspondingly applies for one first context based on one connection identifier in the multiple packets, to record the first segment sequence number. Therefore, the transport layer of the second device may receive a large data segment.

In a possible implementation, the second device includes multiple second ports, the multiple second ports are separately connected to first ports of the first device through transmission paths, the multiple transmission paths include a first transmission path, and the first transmission path is used to receive the first data segment, the connection identifier, and the first segment sequence number or send the first response message.

In this possible implementation, the second device includes the multiple ports and the multiple transmission paths, and data is received on the first transmission path without interference from another transmission path, to improve data receiving efficiency.

In a possible implementation, multiple processes of the second device include one second process, the second process is used to receive the first data stream from a first process, and the first process is a process of the first device.

In this possible implementation, the second device receives, by using the second process, the first data stream provided by the first process of the first device, to improve efficiency of receiving the first data stream.

In a possible implementation, at least one data segment in the first data stream is carried in a packet with a strict order, and the strict order indicates the second device to process the data segment based on a segment sequence number of the data segment in the packet.

In this possible implementation, the packet that corresponds to the first data stream and that is received by the second device may further include the strict order. The second device may determine, based on the strict order, which data segments have a strict order, process the corresponding data segments strictly according to the order, and flexibly process data segments in a packet that do not include a strict order, to improve flexibility of processing the data segments by the second device.

According to a third aspect, this application provides a communication apparatus, including: a processor; and
a memory, where the memory is coupled to the processor, the memory is configured to store program instructions, and when the program instructions are executed on the processor, the method in the first aspect or any one of the possible implementations of the first aspect is implemented.

According to a fourth aspect, this application provides a communication apparatus, including: a processor; and
a memory, where the memory is coupled to the processor, the memory is configured to store program instructions, and when the program instructions are executed on the processor, the method in the second aspect or any one of the possible implementations of the second aspect is implemented.

According to a fifth aspect, this application provides a communication apparatus, including a module configured to implement the first aspect or any one of the possible implementations of the first aspect.

In a possible implementation, the communication apparatus includes:
a first sending module, configured to send a first data segment, a connection identifier, and a first segment sequence number, where the first data segment is a data segment in a first data stream, the connection identifier indicates a second device to apply for a first context, the first context is used to record the first segment sequence number, the first segment sequence number is a segment sequence number of the first data segment, and the second device is a device connected to a first device through a physical link; and
a first receiving module, configured to receive a first response message, where the first response message is provided by the second device, the first response message includes first description information, and the first description information describes a correspondence between the first context and the first data stream.

In a possible implementation, the first sending module is further configured to: after receiving the first response message, send a release packet, where the release packet includes the first description information and a release identifier, and the release identifier indicates the second device to release the first context.

In a possible implementation, the first receiving module is further configured to: before receiving the first response message, receive a second response message, where the second response message is sent by the second device when the second device fails to obtain the first context through application, and the second response message does not include the first description information.

The first sending module is further configured to send a second data segment, the connection identifier, and a second segment sequence number, where the second data segment is an unsent data segment in the first data stream, the first context is further used to record the second segment sequence number, and the second segment sequence number is a segment sequence number of the second data segment.

In a possible implementation, the communication apparatus further includes a processing module. The processing module is configured to: before sending the first data segment, the connection identifier, and the first segment sequence number, set up a reliable transport connection, where the reliable transport connection is a reliable connection between a transport layer of the first device and a transport layer of the second device, and the reliable transport connection is used to send the first data segment, the connection identifier, and the first segment sequence number or receive the first response message.

In a possible implementation, the first device includes a transaction layer used to transfer data to the transport layer of the first device, the data transferred by the transaction layer to the transport layer of the first device includes the first data segment, the connection identifier, and the first segment sequence number, the transport layer of the first device is configured to include the first data segment, the connection identifier, and the first segment sequence number in multiple first packets, and there is one packet in the multiple first packet includes the connection identifier.

In a possible implementation, the first device includes multiple first ports, the multiple first ports are separately connected to second ports of the second device through different transmission paths, the multiple transmission paths include a first transmission path, and the first transmission path is used to send the first data segment, the connection identifier, and the first segment sequence number or receive the first response message.

In a possible implementation, multiple processes of the first device include one first process, the first process is used to send the first data stream to a second process, and the second process is a process of the second device.

In a possible implementation, the communication apparatus further includes the processing module, and the processing module is configured to:
determine a data transmission mode indicated by a first application of the first device; and
if the data transmission mode is a first mode, perform the step of sending the first data segment; or
if the data transmission mode is a second mode, send the first data stream based on second description information, where the second description information indicates a correspondence between a preset context and the first data stream, the preset context is a context obtained through negotiation with the second device in advance, and the preset context is used to record segment sequence numbers of multiple data segments in the first data stream.

In a possible implementation, at least one data segment in the first data stream is carried in a packet with a strict order, and the strict order indicates the second device to process the data segment based on a segment sequence number included in the packet.

According to a sixth aspect, this application provides a communication apparatus, including:
a second receiving module, configured to receive a first data segment, a connection identifier, and a first segment sequence number, where the first data segment is a data segment in a first data stream, the connection identifier indicates a second device to apply for a first context, the first context is used to record the first segment sequence number, the first segment sequence number is a segment sequence number of the first data segment, and a first device is a device connected to the second device through a physical link; and
a second sending module, configured to send a first response message, where the first response message includes first description information, and the first description information describes a correspondence between the first context and the first data stream.

In a possible implementation, the second receiving module is further configured to: after sending the first response message, the method further includes:
receive a release packet, where the release packet includes the first description information and a release identifier.

The communication apparatus further includes a processing module, configured to release the first context based on the first description information and the release identifier.

In a possible implementation, the communication apparatus further includes the processing module, configured to: after sending the first response message, if the first context is not used after timeout, release the first context.

In a possible implementation, the second sending module is configured to: before sending the first response message, the method further includes: send a second response message, where the second response message is sent by the second device when the second device fails to obtain the first context through application, and the second response message does not include the first description information.

The second receiving module is further configured to receive a second data segment, the connection identifier, and a second segment sequence number, where the second data segment is an unreceived data segment in the first data stream, the first context is further used to record the second segment sequence number, and the second segment sequence number is a segment sequence number of the second data segment.

In a possible implementation, the communication apparatus further includes the processing module, configured to: before receiving the first data segment, set up a reliable transport connection, where the reliable transport connection is a reliable connection between a transport layer of the first device and a transport layer of the second device, and the reliable transport connection is used to receive the first data segment, the connection identifier, and the first segment sequence number or send the first response message.

In a possible implementation, the transport layer of the second device is configured to receive multiple first packets, and send the first data segment, the connection identifier, and the first segment sequence number that are included in the multiple first packets to a transaction layer of the second device, where there is one packet in the multiple first packet includes the connection identifier.

In a possible implementation, the second device includes multiple second ports, the multiple second ports are separately connected to first ports of the first device through transmission paths, the multiple transmission paths include a first transmission path, and the first transmission path is used to receive the first data segment, the connection identifier, and the first segment sequence number or send the first response message.

In a possible implementation, multiple processes of the second device include one second process, the second process is used to receive the first data stream from a first process, and the first process is a process of the first device.

In a possible implementation, at least one data segment in the first data stream is carried in a packet with a strict order, and the strict order indicates the second device to process the data segment based on a segment sequence number of the data segment in the packet.

According to a seventh aspect, this application provides a computer-readable storage medium. The computer-readable storage medium stores a computer program or instructions, and when the computer program or the instructions are executed by a processor, the method in the first aspect or any one of the possible implementations of the first aspect or the method in the second aspect or any one of the possible implementations of the second aspect is implemented.

According to an eighth aspect, this application provides a computer program product, including a computer program or instructions. When the computer program or the instructions are executed by a computer, the method in the first aspect or any one of the possible implementations of the first aspect or the method in the second aspect or any one of the possible implementations of the second aspect is implemented.

According to a ninth aspect, this application provides a chip. The chip is configured to implement the method in the first aspect or any one of the possible implementations of the first aspect or the method in the second aspect or any one of the possible implementations of the second aspect.

According to a tenth aspect, this application provides a computing device cluster. The computing device cluster includes:
a first device, where the first device is configured to implement the method in the first aspect or any one of the possible implementations of the first aspect; and
a second device, connected to the first device, where the second device is configured to implement the method in the second aspect or any one of the possible implementations of the second aspect.

For technical effect of the third aspect to the tenth aspect, refer to technical effect of the first aspect or any one of the possible implementations of the first aspect and the second aspect or any one of the possible implementations of the second aspect. Details are not described herein again.

### BRIEF DESCRIPTION OF DRAWINGS

FIG. 1 is a diagram of an architecture of a computing device cluster in a direct connection manner according to an embodiment of this application;
FIG. 2 is a diagram of an architecture of a computing device cluster connected by using a switch according to an embodiment of this application;
FIG. 3 is an interaction flowchart of communication between a first device and a second device according to an embodiment of this application;
FIG. 4 is another interaction flowchart of communication between a first device and a second device according to an embodiment of this application;
FIG. 5 is an interaction flowchart in which a first device communicates with a second device through a reliable transport connection according to an embodiment of this application;
FIG. 6 is a diagram in which a process of a first device communicates with a process of a second device at transport layers according to an embodiment of this application;
FIG. 7 is a diagram in which a first device communicates with a second device by using a switch according to an embodiment of this application;
FIG. 8 is a diagram of a JFS according to an embodiment of this application;
FIG. 9A and FIG. 9B are still another interaction flowchart of communication between a first device and a second device according to an embodiment of this application;
FIG. 10A and FIG. 10B are a communication interaction diagram in which multiple data segments are transmitted between a first device and a second device according to an embodiment of this application;
FIG. 11 is a diagram in which a first device communicates with a second device through a direct connection according to an embodiment of this application;
FIG. 12A and FIG. 12B are a communication interaction diagram in which multiple data segments are transmitted between a first device and a second device through a direct connection according to an embodiment of this application;
FIG. 13 is a diagram in which a first device transmits a data stream based on different data transmission modes according to an embodiment of this application;
FIG. 14 is another diagram of a JFS according to an embodiment of this application;
FIG. 15 is a diagram of a structure of a communication apparatus according to an embodiment of this application;
FIG. 16 is a diagram of another structure of a communication apparatus according to an embodiment of this application; and
FIG. 17 is a diagram of a structure of a communication device according to an embodiment of this application.

### DESCRIPTION OF EMBODIMENTS

In the specification, claims, and accompanying drawings of this application, the terms "first", "second", "third", "fourth", and the like (if existent) are intended to distinguish between similar objects but do not necessarily indicate a specific order or sequence. It should be understood that the terminology termed in such a way are interchangeable in proper circumstances so that embodiments described herein can be implemented in orders other than the order illustrated or described herein. In addition, terms "include", "have", and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

In addition, it should be understood that the character "/" in this specification usually indicates an "or" relationship between associated objects. In this specification, "at least one of the following" or a similar expression thereof represents any combination of the listed items. For example, at least one of A, B, and (or) C may represent the following six cases: Only A exists, only B exists, only C exists, both A and B exist, both B and C exist, both A and C exist, and both A, B, and C exist. A, B, and C may be singular or plural. In embodiments of this application, "indicate" may represent control, that is, one object controls another object to perform an action, and the controlled object needs to perform the action. In addition, "indicate" may alternatively represent notification, that is, one object notifies another object to perform an action, the object that is notified to perform the action may choose to perform the action or not to perform the action. In addition, "indicate" may be a direct indication, for example, an object directly sends the indication to another object. In addition, "indicate" may alternatively be an indirect indication, that is, an object sends the indication to another object via one or more intermediate objects. In addition, "indicate" may alternatively be understood based on a meaning indicated in embodiments of this application. This is not limited herein. "One or more" in embodiments of this application may be understood as "one or more", and vice versa. "One or more" may also represent "at least one".

The following describes an application scenario of embodiments of this application by using an example. Embodiments of this application may be applied to a scenario of a computing device cluster. The computing device cluster includes multiple computing devices, the multiple computing devices include a first device and a second device, the first device is a computing device that sends a first data stream in the multiple computing devices, and the second device is a computing device that receives the first data stream. The multiple computing devices transmit data through a physical link connection, and cooperate with each other to implement a large-scale computing task. The computing device in the computing device cluster may also be referred to as a node. Each node may be used as an independent computer, and has a processor, a memory, and a memory. A physical link may provide high-speed network interconnection.

Embodiments of this application may be further applied to a super node (Super Node) scenario. A super node is a high-performance cluster formed by interconnecting multiple nodes via high-bandwidth and low-latency network on chip buses and switches. A scale of the super node is greater than a scale of a node in a cache coherent non-uniform memory access (cache-coherent non uniform memory access, CC-NUMA) architecture, and interconnection bandwidth of the nodes in the super node is greater than interconnection bandwidth of an Ethernet network. Multiple super nodes are connected over a data center network. The data center network includes multiple core switches and multiple aggregation switches. The data center network may form a scale domain. The multiple super nodes may form a performance domain. More than two super nodes may form a macro cabinet. Macro cabinets may also be connected over the data center network. One node in the super node may be used as the first device or the second device in embodiments of this application. The first device or the second device may be a processor, a server, a desktop computer, a memory array controller, a memory, or the like. The processor may be an XPU used for data processing, for example, a central processing unit (central processing unit, CPU), a graphics processing unit (graphics processing unit, GPU), a data processing unit (data processing unit, DPU), a neural processing unit (neural processing unit, NPU), an embedded neural-network processing unit (neural-network processing unit, NPU), or the like. In embodiments of this application, when a data stream is transmitted between the first device and the second device, a delay is low, enhancing performance of the supernode.

Based on an overall scale of tasks to be processed by the computing device cluster, a corresponding network topology structure may be set for the computing device cluster.

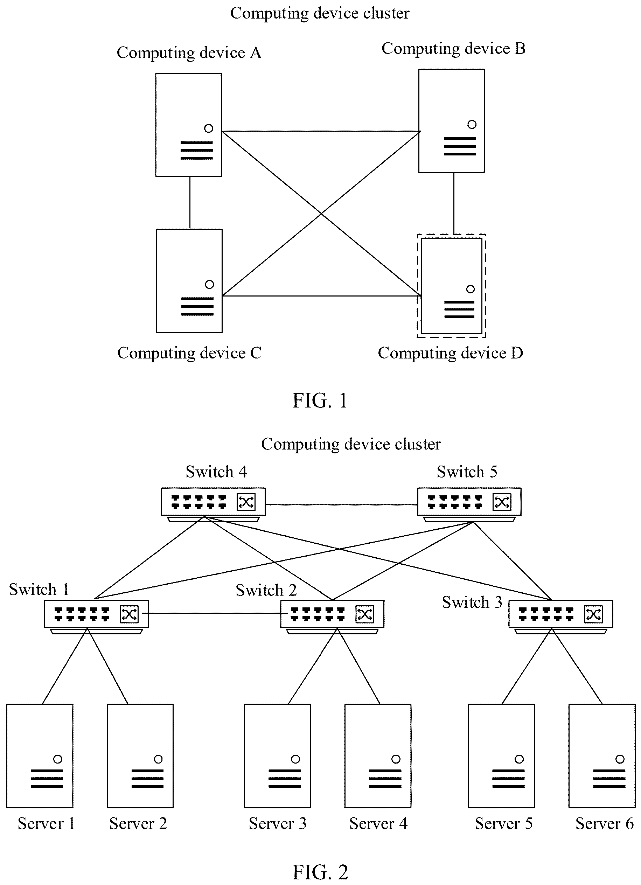

As shown in FIG. 1, computing devices in the computing device cluster are directly connected. The computing device cluster includes a computing device A, a computing device B, a computing device C, and a computing device D. Every two computing devices are directly connected. If an overall scale of tasks to be processed by the computing device cluster is small, a simple network topology structure may be used. In the network topology structure, a direct connection is set up between the computing devices in the computing device cluster, and data is directly transmitted through the direct connection. The network topology structure can enable the data to be quickly and directly transmitted between different computing devices without interference from an intermediate node. Even if a connection between two computing devices is faulty, connections between other computing devices are still normal, giving the computing device cluster strong fault tolerance.

For example, the computing device A sends a data stream 1 to the computing device B. In this case, the computing device A serves as the first device, and the computing device B serves as the second device. When the computing device A needs to send the data stream 1, the data stream 1 is segmented into five data segments, for example, a data segment A1 to a data segment A5. The computing device A first sends one of the data segments. It is assumed that the data segment A1 is first sent. A connection identifier and an SSN 1 corresponding to the data segment A1 are sent together with the data segment A1. The computing device B receives the data segment A1, the SSN 1, and the connection identifier, applies for a context based on the connection identifier, where the context is denoted as a CXT 1, records the SSN 1 in the CXT 1, and caches the data segment A1. After applying for the context CXT 1, the computing device B provides the CXT 1 for the computing device A. After receiving the CXT 1, the computing device A sends data segments A2 to A5, where the data segments may be sent out of order. When sending the data segments A2 to A5, the CXT 1 and respective corresponding SSNs are carried, and the connection identifier is not carried. The computing device B receives and caches the data segments A2 to A5, finds the previously applied context based on the CXT 1, and records the SSN of each data segment in the context corresponding to the CXT 1. The computing device B processes the cached data segments A1 to A5 in an order of SSNs that are recorded in the context corresponding to the CXT 1. In this manner, the computing device A communicates with the computing device B through a link layer connection (for example, a port of the computing device A is directly connected to a port of the computing device B for communication). A transmission path between the computing device A and the computing device B is short, and a transport connection does not need to be set up, so that the computing device A can quickly send the data stream 1 to the computing device B without complex routing and protocol processing (for example, TCP processing is not required), and destination ordering is implemented on the computing device B side. This reduces a delay of transmitting the data stream 1. In addition, if the computing device B, the computing device C, or the computing device D sends a data stream to the computing device A, for example, sends a data stream 2, the computing device that sends the data stream 2 serves as the first device, and the computing device A serves as the second device. Therefore, for different data stream transmission processes, a same computing device may be the first device or the second device.

As shown in FIG. 2, computing devices in the computing device cluster are connected via switches. The computing device cluster includes multiple switches and multiple servers. A server 1 and a server 2 are connected to a switch 1, a server 3 and a server 4 are connected to the switch 2, and a server 5 and a server 6 are connected to the switch 3. The switch 1 is connected to the switch 2, a switch 4, and a switch 5, the switch 2 is further connected to the switch 4 and the switch 5, and the switch 4 and the switch 5 are further connected to the switch 3. In this architecture, servers are not connected in a point-to-point manner, but are connected via switches, and the servers forward data streams via switches. The switches form a mesh structure, so that the computing device cluster transmits data on different paths. This provides redundancy and load balancing capabilities. In this network architecture, it is easy to extend a scale of the cluster, that is, easy to add more servers or switches. The server 1 to the server 6 serve as the first device when sending a data stream, and serve as the second device when receiving the data stream.

In addition to the foregoing network topology structure, the computing device cluster may alternatively use another network topology, for example, a star topology in which the multiple computing devices are connected via a central node, or a ring topology in which each computing device is connected to two other computing devices. A network topology structure of the computing device cluster is not limited in embodiments of this application.

With reference to the foregoing network topology structures of the computing device cluster, the computing device cluster may be applied to various service scenarios. The following provides several examples.

Distributed system: In the distributed system scenario, for example, a distributed storage system or a distributed database, a data stream is transmitted between different nodes, and some computing tasks have a strict requirement on a data order, for example, a data stream with a dependency relationship. In this case, destination ordering needs to be implemented. In these scenarios, a destination (the second device) applies for a context based on a request of the first device (based on a connection identifier), and records a segment sequence number in the context, to implement destination ordering. For example, on an e-commerce cloud platform, multiple nodes may be used to process a large quantity of user requests. In this scenario, multiple servers need to cooperate. It is assumed that a user A places an order to purchase a commodity on the e-commerce platform. A source server sends order information to a destination server for payment verification and inventory update. These tasks need to be sequentially executed, that is, payment verification is performed first, and inventories are updated after payment is completed. If the tasks are not sequentially executed, a quantity of inventories or payment information may be incorrect. In this process, the source server may synchronously send multiple requests (data segments) and sequence numbers, so that the destination server processes the requests in an order of the sequence numbers. This implements destination ordering. In this process, the source server needs to send a connection identifier to the destination server to apply for a context. When sending the connection identifier, the source server further sends the data segment, to reduce a delay.

High-performance computing (high performance computing, HPC): Tasks in high-performance computing requires a large amount of parallel computing, and one task may depend on a result of another task. In this case, one data stream corresponding to multiple tasks may include data segments corresponding to different tasks. The first device may indicate an order of different tasks based on segment sequence numbers. The second device receives the data segments and the segment sequence numbers of the data segments, and processes the data segments based on the segment sequence numbers, to implement destination ordering. The segment sequence numbers are recorded in a context applied for the first device. For example, in an artificial intelligence (artificial intelligence, AI) training process, multiple servers perform parallel computing and synchronize computing results with each other. When the servers communicate with each other, a source server sends messages to a destination server. In multiple applications, the messages need to be sequentially executed. For example, during model training, the multiple servers process different training data and model parameters. The source server writes data into the destination server, and then notifies the destination server to process the data after writing is completed. In the destination server, a 'notification message' (B) needs to be executed later than 'write data' (A). The source adds sequence numbers to tasks with a strict order, and sends the tasks to the destination. The destination executes the tasks in an order of the sequence numbers. In high-performance computing, a remote direct memory access (remote direct memory access, RDMA) technology may be used between computing devices in a computing device cluster, and replace a conventional transmission control protocol (transmission control protocol, TCP) technology. The first device may directly transfer a data stream to a storage area of the second device through a physical link, to bypass processing of an operating system, and reduce a delay of transmitting data stream.

In addition to the foregoing scenarios, the communication method in embodiments of this application is further applicable to other scenarios. This is not limited herein.

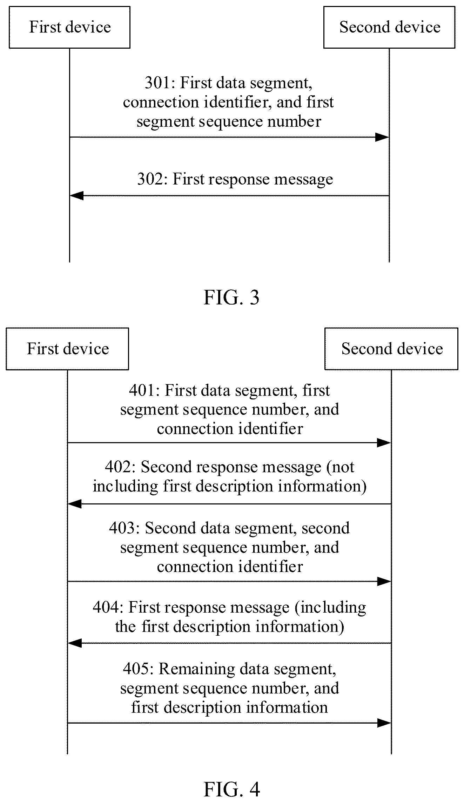

The following describes steps included in the communication method in embodiments of this application. As shown in FIG. 3, the communication method includes the following steps.

Step 301: A first device sends a first data segment, a connection identifier, and a first segment sequence number to a second device, and correspondingly, the second device receives the first data segment, the connection identifier, and the first segment sequence number.

The first data segment is a data segment in a first data stream, the connection identifier indicates the second device to apply for a first context, the first context is used to record the first segment sequence number, and the first segment sequence number is a segment sequence number of the first data segment. When subsequently receiving a segment sequence number of another data segment (for example, a second segment sequence number of a second data segment) in the first data stream, the second device records the segment sequence number of the another data segment in the first context. Therefore, it may be understood that, in an entire transmission process of the first data stream, the first context is used to record a segment sequence number of each data segment in the received first data stream.

When the first device needs to send the first data stream, the first device segments the first data stream into multiple data segments, and selects one data segment from the multiple data segments as the first data segment. The first data segment may be a data segment that is sent first in the first data stream. The first device may determine the to-be-sent first data segment in the following manner:

A data segment is selected out of order from the first data stream as the first data segment. The multiple data segments have a specific order (an order in which the data segments are processed), and there is a chronological order between at least two data segments in the first data stream. Two data segments with a chronological order need to be sequentially processed, and cannot be processed out of order. Selecting a data segment out of order means that the first device selects a data segment not using an order of the data segments as a determining factor for the selection. For example, the first data stream includes 10 data segments, three of the data segments need to be sequentially processed, and the remaining seven data segments may be sequentially processed or not be sequentially processed. The first device may select a data segment from the three data segments with a chronological order as the first data segment, or may select a data segment from the seven data segments that are out of order as the first data segment. When receiving the first data segment, the second device may determine, based on the first segment sequence number that is synchronously received, a processing order of the first data segment, record the first segment sequence number in the first context, and subsequently process the data segment based on the segment sequence number recorded in the first context. In this case, regardless of a sending order of the first device, the second device can implement sequential processing of the data segments through destination ordering.

A leading data segment is selected from the first data stream as the first data segment. Alternatively, the first device may select, from multiple data segments with a specific order, a leading data segment as the first data segment, for example, select a data segment that needs to be first processed as the first data segment. It may be understood that, due to limited context resources of the second device or other reasons, after the first device sends the connection identifier and the first data segment, the second device may not immediately obtain, through application, the first context for the first data segment. In this case, when sending the connection identifier and the first data segment in the first data stream, the first device may use a data segment whose segment sequence number is a 1^{st} number as the first data segment. Therefore, if the second device fails to obtain the first context through application based on the connection identifier, the second device may first process the first data segment. Because the first data segment is leading, the first data segment is still sequentially processed first. After sending the first data segment, the first device acknowledges, based on a response message of the second device, that the second device fails to obtain the first context through application, and further attempts to send the connection identifier and a subsequent data segment. The second device attempts to apply for the first context again. Because context resources of the second device are dynamically allocated and released, currently, an idle context may have been allocated as the first context. In other words, before the second device feeds back a response message indicating that the second device successfully obtains the first context through application, the first device may sequentially send the data segments. After the second device feeds back a response message indicating that the first context is successfully obtained through application, the first device may send the data segments in the first data stream out of order. When sending the segments in the first data stream out of order, the first device may directly send another data segment without waiting for a data segment to be received, to reduce a transmission delay.

The first data stream is a data set that can be segmented into multiple data segments. The first data stream is, for example, a data stream in collaborative computing of multiple processors. In AI training, multiple graphics processing units (graphics processing unit, GPU) may operate cooperatively to accelerate model training. In this case, the first data stream may be a data stream sent by a primary GPU (the first device) to a secondary GPU (the second device), and the data stream includes multiple data segments, for example, one data segment is a write gradient parameter, another data segment is an execution indication, and the execution indication indicates to execute the write gradient parameter. The first data stream may alternatively be, for example, a data stream in a distributed database. The first data stream includes three data segments, a 1^{st} data segment indicates a destination database node (the second device) to obtain data 1, a 2^{nd} data segment is used to enable the destination database node to obtain data 2, and a 3^{rd} data segment is used to enable the destination database node to combine the data 1 and the data 2. In this case, the 3^{rd} data segment needs to be processed after the 1^{st} data segment and the 2^{nd} data segment.

The connection identifier indicates the second device to apply for the first context. That the second device is indicated to apply for the first context includes one of the following cases. Case 1: The second device is controlled to apply for the first context. After receiving the connection identifier, the second device needs to apply for the first context. Even if there is no idle context currently, the second device may preferentially update a context in use to an idle state and allocate the context as the first context. This case is applicable to a scenario in which a priority of the first device is high. Case 2: The second device is requested to apply for the first context. After receiving the connection identifier, the second device may selectively apply for the first context. For example, if there is no idle context, the second device may not apply for the first context. Alternatively, there is an idle context, but the context needs to be allocated to a device with a higher priority. In this case, the second device may reject to apply for the first context. Alternatively, once the second device determines that there is an idle context, the context is applied to be the first context.

The connection identifier may be considered as an identifier used to set up a connection. When the first device sends the first data stream to the second device, a connection needs to be maintained. The connection is used to enable the first device or the second device to separately maintain resources required in a process of transmitting the first data stream. On the first device side, when the first data stream is sent, for example, specific resources are required to record a status of sending the first data stream, record a received response, and maintain information in the received response, for example, maintain first description information. The second device needs to record the segment sequence number of the data segment in the first data stream. Therefore, the second device needs to apply for the first context. In this process, when the first data stream is sent, applying for the first context by the second device may be considered as a connection setup operation. The connection identifier may be a string of characters, provided that the connection identifier can be identified by the second device as that the first context needs to be applied for. Specific content of the connection identifier is not limited in embodiments of this application.

The first segment sequence number is used to uniquely identify the first data segment, and indicates an order of the first data segment. The segment sequence number is unique, that is, the first segment sequence number is different from a segment sequence number of another data segment in the first data stream. In addition, the segment sequence numbers can represent a specific order, for example, set in ascending order, so that the second device can process the data segments in a specific order.

When sending the first data segment, the connection identifier, and the first segment sequence number, the first device includes the first data segment, the connection identifier, and the first segment sequence number in a first packet. If the first data segment has a small data amount and can be carried in one first packet, the first data segment, the connection identifier, and the first segment sequence number are carried in a same first packet. If the first data segment has a large data amount and cannot be carried in one first packet, multiple first packets may be set. The first data segment is separately divided into multiple first packets, each first packet includes a first segment sequence number, and one first packet includes the connection identifier. In addition to the foregoing information, the first packet may further include other information, for example, a source address, a destination address, a source port number, a destination port number, or a communication protocol. The source address indicates an address of an object that sends the data segment, the destination address may be an address of an object that receives the data segment, the source port number is an identifier of a port that sends the data segment, the destination port number is an identifier of a port that receives the data segment, and the communication protocol indicates which protocol is used to transmit the packet. The first packet may alternatively include information other than the foregoing information. This is not limited herein.

After sending the first data segment, the connection identifier, and the first segment sequence number, the first device waits to receive a response message of the first data segment. Before receiving the response message of the first data segment, the first device does not send another data segment in the first data stream, and determines a manner of subsequently sending a data segment after receiving the response message. If the first device receives a response message indicating that the first context is successfully obtained through application, the second device can record the segment sequence numbers of the multiple data segments in the first data stream for destination ordering. In this case, the first device may continuously send multiple data segments in the first data stream that are not sent previously, a sending order is not limited, and the second device may process the data segments in a specific order based on the first context. If receiving a response message indicating that the first context fails to be obtained through application, the first device selects a data segment from unsent data segments for sending, synchronously sends a corresponding segment sequence number and the connection identifier, indicates the second device to apply for the first context again, and attempts to set up a dynamic connection. In addition, when the first context fails to be obtained through application, the first device may send the data segments in the first data stream through source ordering. In the source ordering manner, each time a data segment is sent in order, the first device sends a next data segment in order when receiving an acknowledgment message (used to acknowledge that the currently sent data segment is received) from the second device. Therefore, data sent by a source is in order, and a destination can sequentially process the data.

The first device and the second device are connected through a physical link. In a computing device cluster, multiple computing devices may be connected according to the InfiniBand protocol. InfiniBand supports efficient remote direct memory access, and is applicable to low-latency and high-bandwidth scenarios such as large-scale data processing and AI training. The first device and the second device may be connected through a fibre channel (fibre channel, FC) that is applicable to high-bandwidth and high-reliability data storage and access. Alternatively, the first device and the second device are connected over the Ethernet. The foregoing shows examples. The first device may communicate with the second device according to various protocols through a physical link connection. This is not limited herein.

The first device may communicate with the second device according to a universal bus (Unified Bus, UB) protocol. The universal bus protocol is described in detail below.

The universal bus protocol may also be referred to as a LingQu bus or a unified bus. The universal bus protocol breaks existing protocol barriers, and eliminates unnecessary intermediate conversion overheads, to implement an ultra-low latency between the first device and the second device. The universal bus protocol defines an independent transaction layer and transport layer. There is a connection between transport layers, but no connection between transaction layers. The transport layer is responsible for retransmission of a lost packet in a network to ensure reliable transmission, and the transaction layer processes different transactions. A transport layer of the first device receives, from the network, a data packet sent by the second device, strips a transport header, and forwards the packet without the transport header to a transaction layer of the first device. A UBLINK at a link layer is defined in the UB protocol, and is a basic connection layer used for communication between the first device and the second device. The UBLINK may depend on an Ethernet MAC layer, or may be used for communication over the Ethernet in a UB over Ethernet mode, to provide a physical transmission medium for the UB protocol. A network partition ID (network partition ID, NPI) and a UB partition ID (UB entity ID, UEID) are defined in the UB protocol, and are used to isolate physical networks and tenants, respectively. The partition ID helps manage data streams of multiple networks or tenants in a large-scale computing cluster, so that different data streams do not interfere with each other.

The UB protocol is run on an IP network, and an IP protocol header is used to identify a data packet at a network layer. In a transmission process, a UDP protocol header is used to identify a specific application data stream. A subsequent data packet includes a transport header (transport header, TPH) that is used to identify details of the data packet at the transport layer, for example, a sequence and a destination port of the data packet. The transport header may include information such as a TP opcode (operation type), a source transport port number, a destination transport port number, and a packet sequence number (packet sequence number, PSN). When sending a packet, the transport layer of the first device adds a PSN to each packet, and the PSNs increase with packets. After receiving the packet, the second device returns a transport acknowledgment (transport ACK, TPACK) that carries a PSN of the received packet, to notify the transport layer of the first device that the packet has been correctly received. If a receiving side receives a packet and finds that a packet whose PSN is smaller than a PSN of the packet is not received, the receiving side determines that 'the packet whose PSN is smaller than the PSN of the packet' is lost in a network, and returns a transport selective acknowledgment (transport selective ACK, TPSACK) that carries the PSN of the received packet and the PSN of the lost packet. After receiving the TPSACK, a transport layer of a transmitting side retransmits the lost packet. A message at the transaction layer may be large, for example, 16 MB. In the UB protocol, multiple transaction layers share one transport layer. To prevent a message at a transaction layer from occupying a transport connection for a long time, when sending the message to the transport layer, the transaction layer segments the message into multiple data segments, for example, a data segment of 64 KB, one transaction layer sends only one data segment to the transport layer each time, and each data segment corresponds to one SSN. The second device implements destination ordering based on the SSN.

In the UB protocol, each device (the first device or the second device) or process participating in communication is identified by a UB entity ID (UEID). The UEID includes a source entity ID (source entity ID, SEID) and a destination entity ID (destination entity ID, DEID), and is a unique identifier in the entire network. The entity ID may represent multiple types of devices such as a virtual machine and a storage device (for example, an SSD controller), and helps accurately locate a source and a destination in the entire UB protocol system. When an application needs to perform a data read/write operation or another operation, a transaction header (transaction header, TAH) provides an upper-layer protocol for managing data transmission. The TAH includes information such as an operation code (TA opcode), a destination JFR number, a transaction segment sequence number (transaction segment sequence number, TASSN), a read/write address of an operation, and a length. The TAH enables each data operation to be performed in a predetermined order, and supports different types of operations (for example, send, read, write, and atomic operations). To implement interaction between the application process and the transaction layer, two types of Jetty interfaces: a JFS (Jetty for send) and a JFR (Jetty for receive) are defined in the UB protocol. The JFS is a Jetty for send, and may send data to one or more destination devices. The JFR is a Jetty for receive, and may receive messages from one or more sources. The Jetty interface enables the application process to transparently send and receive messages without considering transmission details at a bottom layer.

One data segment Segment sent by the transaction layer of the first device is divided into multiple packets at the transport layer, for example, the multiple first packets. After receiving one entire data segment (for example, the first data segment) and correctly executing the data segment, the second device returns a transaction acknowledgment (transaction ACK, TAACK). The transaction layer of the first device receives the TAACK, and determines that the data segment is correctly executed. The second device receives a data segment. If an error occurs during execution (for example, a page fault occurs during memory reading/writing), the second device returns a transaction no OK acknowledgment (transaction no OK ACK, TANAK). The transaction layer of the first device retransmits the data segment based on the transaction no OK acknowledgment.

In addition, communication between the first device and the second device is not limited to the foregoing UB protocol. A reliable connection may be set up according to a conventional TCP protocol, and may be used to transmit a data stream and a response message. This is not limited herein.

The first device includes multiple first ports, the multiple first ports are separately connected to second ports of the second device through different transmission paths, the multiple transmission paths include a first transmission path, and the first transmission path is used to send the first data segment, the connection identifier, and the first segment sequence number or receive a first response message.

The first device and the second device may set up the transmission path between the first port and the second port based on a socket application programming interface (socket application programming interface, Socket API) or a communication management protocol (communication management protocol, CM). A port identifier list and a port mapping table may be respectively set for the first device and the second device. The port identifier list includes an identifier corresponding to the port, and the port mapping table records the multiple transmission paths. For an IP network routing mode, the port identifier may be an IP address, and the port mapping table may be an IP mapping table. For an ID network routing mode, the port identifier may be an ID address, and the port mapping table may be an ID mapping table. The multiple transmission paths include the first transmission path. The first transmission path is used to enable the first device to communicate with the second port of the second device through the first port, to send data or receive data. The data sent by the first device includes the data segment in the first data stream, the SSN, the connection identifier, and the like. The data received by the first device includes a response message. The second device receives the first data stream and sends the response message through the first transmission path.

At least one data segment in the first data stream is carried in a packet with a strict order, and the strict order indicates the second device to process the data segment based on a segment sequence number included in the packet. There is a chronological order between the at least one data segment and another data segment in the first data stream, that is, the at least one data segment needs to be processed before or after the another data segment. The data segment with a chronological order carries a strict order when being sent, and after receiving the strict order, the second device needs to process the data segment based on the segment sequence number of the data segment.

Step 302: The second device sends the first response message, and correspondingly, the first device receives the first response message.

The first response message is provided by the second device, the first response message includes the first description information, and the first description information indicates a correspondence between the first context and the first data stream.

After receiving the first response message, the first device sends an unsent data segment, in the first data stream, that may carry the first description information. After the first device receives the first response message, if sending of all data segments in the first data stream is completed, a release packet may be sent. The release packet includes the first description information and a release identifier, and the release identifier indicates the second device to release the first context.

The release packet includes a last unsent data segment in the first data stream, so that the first device can indicate the second device to release the first context in time when sending the last data segment in the first data stream. When receiving the release packet including the release identifier, the second device checks the data segment and the SSN that are included in the release packet, records the SSN in the first context, sequentially processes the multiple data segments based on the multiple SSNs recorded in the first context, and then releases the first context. Alternatively, after sending all the data segments of the first data stream, the first device sends the release packet. In this case, the release packet does not include a payload, is a control packet, and indicates the second device to release the first context. The first device may release a connection resource between the first device and the second device in time by sending the release packet, to indicate, to the second device, that a current connection used to transmit the first data stream is no longer used, and a related resource may be released. The second device releases the first context in time based on the release packet, and marks the first context as an idle state. The context in the idle state may be further used to record an SSN of another data stream, to implement destination ordering for the another data stream.

After sending the first response message, if the second device receives the data segment in the first data stream, the carried SSN, and the first description information, the second device determines the first context based on the first description information, and records the SSN in the first context. If the first device has sent all the data segments in the first data stream, the second device receives the release packet after the first device sends the release packet. The release packet includes the first description information and the release identifier. The second device releases the first context based on the first description information and the release identifier. In addition, alternatively, the second device may actively release the first context. After sending the first response message, if the second device determines, that the first context is not used after timeout, the second device releases the first context. This can fully use context resources.

As shown in FIG. 4, after the first device sends the first data segment, when the second device fails to obtain the first context through application, the first device indicates the second device again to apply for the first context. FIG. 4 includes the following steps.

Step 401: A first device sends a first data segment, a first segment sequence number, and a connection identifier, and correspondingly, a second device receives the first data segment, the first segment sequence number, and the connection identifier.

The first data segments, the first segment sequence numbers, and the connection identifier are carried in a first packet, and there may be one or more first packets. For example, there is one first packet. In this case, the first data segment has a small data amount, and may be carried in one packet. The first packet includes the first data segment, the first segment sequence number, and the connection identifier.

Step 402: The second device sends a second response message (not including first description information), and correspondingly, the first device receives the second response message.

After receiving the first packet, the second device extracts the connection identifier, parses the connection identifier to determine that a first context needs to be applied for, and determines whether the second device still has an idle context. When determining, through query, that there is no idle context, and cannot apply for the first context, the second device generates the second response message. The second response message does not include description information indicating that the first context is successfully obtained through application, that is, does not include the first description information. In addition, the second response message may also include description information indicating that the first context fails to be obtained through application. When the context is stored in hardware, a storage resource of the hardware is occupied. Because the context needs to be quickly read, the resource for storing the context is a storage resource at a high read/write speed, for example, a register, a memory, or a cache. The storage resource at a high read/write speed stores a small amount of data. Consequently, context resources are limited, and a context needs to be dynamically applied for and released. When a context is released or is not applied for, the context is in an idle state. At a software level, the context may be considered as a data structure, for example, a queue, a linked list, or an array. Due to a limitation that the storage resource is preferred, software resources for storing this type of data structure are also limited.

Step 403: The first device sends a second data segment, a second segment sequence number, and the connection identifier, and correspondingly, the second device receives the second data segment, the second segment sequence number, and the connection identifier.

The first device receives the second response message, and determines that the second response message does not include the first description information, and the second device fails to obtain the first context through application. The first device needs to attempt to indicate the second device to apply for the first context again, that is, send a second packet. The second packet includes the second data segment, the second segment sequence number, and the connection identifier, the second data segment is an unsent data segment in a first data stream, there are one or more second packets, and only one of the multiple second packets includes the connection identifier. The second device receives the second packet, extracts the connection identifier, obtains the first context through application based on the connection identifier, and feeds back a first response message to the first device. When the first device determines the second data segment that needs to be sent, because the first data segment has been sent and cannot be used as the second data segment, the first device selects a data segment out of order or in order from unsent data segments. Out-of-order selection means that selection is performed without considering an order of the data segments, and in-order selection means that a leading data segment is selected.

Before receiving the first response message including the first description information, the first device may send data segments, the connection identifier, and segment sequence numbers for multiple times. In addition, before receiving the first response message, each time the first device sends a data segment (carrying both the connection identifier and a segment sequence number), the first device waits for the second device to feed back a response message. If the response message does not include the first description information, the first device sends a next data segment (carrying both the connection identifier and a new segment sequence number) until the first response message is received. The first device may continuously send multiple data segments in the first data stream, and does not need to wait for a response message of a data segment to send another data segment.

Step 404: The second device sends the first response message (including first description information), and correspondingly, the first device receives the first response message.

When obtaining the first context through application, the second device determines the first description information corresponding to the first context. The first description information may be an identifier corresponding to the first context, and is used to uniquely identify the first context. The first device receives the first response message, and determines the first description information from the first response message, to determine that the second device obtains the first context through application. The first description information can represent a correspondence between the first context and the first data stream. The first device does not need to parse the correspondence between the first context and the first data stream. However, when the first device sends a remaining unsent data segment in the first data stream, the first description information is carried to reflect the correspondence between the first context and the first data stream. Specifically, the correspondence between the first context and the first data stream may be understood as that the data segment recorded in the first context belongs to the first data stream instead of another data stream. Therefore, there is a correspondence between the first context and the first data stream. When the data segment sent by the first device carries the first description information, the second device may determine the first context based on the first description information (for example, the identifier of the first context), and obtain the recorded segment sequence number based on the first context, to determine the corresponding data segment based on the segment sequence number. The corresponding data segment belongs to the first data stream, so that the first data stream corresponds to the first context. The data segment in the first data stream may be processed based on the first context. The identifier of the first context may be a simple field, and a length of the field may be small, to reduce occupation of a packet and reduce network load for transmitting the first description information. The identifier, of the first context, maintained on the second device side and the first description information sent to the first device may be the same, or may be different but have a correspondence, provided that the second device can determine the correspondence between the first context and the first data stream based on the first description information.

In another implementation, in embodiments of this application, the first description information is not limited to be the identifier of the first context. For example, if the length of the first description information is not considered, the first context may be directly used as the first description information. Alternatively, the second device may maintain multiple identifiers for the first context. The multiple identifiers include a direct identifier and an indirect identifier. The first description information is an indirect identifier. After receiving the indirect identifier, the second device converts the indirect identifier into a direct identifier, and then determines the first context based on the direct identifier. For example, the indirect identifier is an identifier obtained by compressing or encrypting the direct identifier. In addition, in a complex implementation, the first description information indirectly, rather than directly, indicates the correspondence between the first context and the first data stream. The indirectly indicated correspondence is actively maintained by the second device, and is transparent to the first device. For example, the first description information includes acknowledgment information, and the acknowledgment information indicates that the first context has been successfully obtained through application, but does not explicitly indicate the identifier of the first context. When the first device sends an unsent data segment in the first data stream, the first description information may not be carried, the data segment is normally sent, and a 5-tuple including a source address, a destination address, a source port, a destination port, and a communication protocol is carried. The second device calculates a hash value based on the 5-tuple, maps the hash value to the first data stream, and determines the first context corresponding to the first data stream. In this case, when receiving the first data segment, the second device also calculates a hash value based on the 5-tuple, maps the hash value to the first data stream, and determines the corresponding first context. In other words, for each received data segment in the first data stream, the second device uniquely maps to the first data stream based on the 5-tuple and determines the first context, and may also set up the correspondence between the first context and the first data stream, to implement destination ordering.

Step 405: The first device sends a remaining data segment, a segment sequence number, and the first description information, and correspondingly, the second device receives the remaining data segment, the segment sequence number, and the first description information.

The remaining data segment is a data segment, in the first data stream, that is not sent temporarily, and there are one or more remaining data segments. The segment sequence number of the remaining data segment is carried when the remaining data segment is sent.

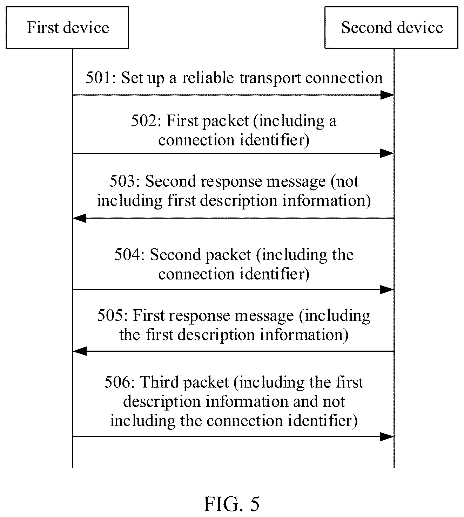

As shown in FIG. 5, data is transmitted between the first device and the second device through a reliable transport connection.

Step 501: A first device sets up a reliable transport connection.

The first device and a second device may transmit data through the reliable transport connection. The reliable transport connection is a reliable connection between a transport layer of the first device and a transport layer of the second device, and the reliable transport connection is used to send a first data segment, a connection identifier, and a first segment sequence number or receive a first response message. Before receiving the first data segment, the second device sets up the reliable transport connection. The reliable transport connection is the reliable connection between the transport layer of the first device and the transport layer of the second device, and the reliable transport connection is used to receive the first data segment, the connection identifier, and the first segment sequence number or send the first response message. The transport layer of the second device is configured to receive multiple first packets, and provide the first data segment, the connection identifier, and the first segment sequence number that are included in the multiple first packets for a transaction layer of the second device, where there is one packet in the multiple first packet includes the connection identifier. A transaction layer of the first device is configured to provide the first data segment, the connection identifier, and the first segment sequence number, the transport layer of the first device is configured to include the first data segment, the connection identifier, and the first segment sequence number in the multiple first packets, and there is one packet in the multiple first packet includes the connection identifier.

The transport layer of the first device obtains IP address information of the second device, and sets up at least one transport connection between the transport layer of the first device and the transport layer of the second device based on the IP address information of the second device. The transport connection is a reliable connection, and the transport layer of the first device has a retransmission mechanism and a congestion control mechanism. The transport layer of the first device sends a packet to and receives a packet from the transport layer of the second device through the transport connection. The sent packet is, for example, the first packet or a second packet, and the received packet is, for example, the first response message or a second response message. The first response message is used to acknowledge that the second device successfully obtains a first context through application, and the first response message includes first description information. The first description information is, for example, an identifier of the first context. When the first device determines that the first response message includes the first description information, the first device determines that the second device successfully obtains the first context through application. If the first response message does not include the first description information, it indicates that the second device fails to obtain the first context through application. After receiving the first response message, the first device sends a packet through the reliable transport connection. The packet carries an unsent data segment in a first data stream and the first description information.

Step 502: The first device sends the first packet (including the connection identifier), and correspondingly, the second device receives the first packet.

The first packet includes the first data segment, the first segment sequence number, and the connection identifier.

Step 503: The second device sends the second response message (not including first description information), and correspondingly, the first device receives the second response message.

The second response message does not include the first description information. The second response message may be sent by the transaction layer of the second device, and forwarded by the transport layer of the second device. The second response message is received by the transport layer of the first device, and transferred to the transaction layer of the first device. The transaction layer of the first device receives the second response information, and sends a data segment that carries the connection identifier again.

Step 504: The first device sends a second packet (including the connection identifier), and correspondingly, the second device receives the second packet.

The second packet includes a second data segment, a second segment sequence number, and the connection identifier. The first device attempts to indicate, by sending the second packet, the second device to apply for the first context again.

Step 505: The second device sends the first response message (including first description information), and correspondingly, the first device receives the first response message.

The first response message includes the first description information.

Step 506: The first device sends a third packet (including the first description information and not including the connection identifier), and correspondingly, the second device receives the third packet.

The third packet is a packet used to carry an unsent data segment. The third packet includes the unsent data segment in the first data stream, a segment sequence number, and the first description information, and does not include the connection identifier.

A plurality of processes of the first device include one first process, the first process is used to send the first data stream to a second process, and the second process is a process of the second device. Details are described below.

Software of the first device creates a packet send or receive queue, which is referred to as a working queue (working queue, WQ). The first device may include multiple first processes. One of the first processes writes multiple sending tasks into the WQ, to generate multiple working queue elements (working queue element, WQE). Each WQE includes one data segment (for example, the first data segment), and one data segment corresponds to at least one packet (data packet). The WQ may be a send queue, a receive queue, and a completion queue (completion queue Element, CQE). The send queue and the receive queue are generated by the software, and are read and parsed by hardware. The completion queue is generated by the hardware, and is read and parsed by the software. Each queue includes multiple processing units. The send queue and the receive queue correspond to a WQE, and the completion queue corresponds to a CQE. The software and the hardware interact with each other through data interfaces of the WQE and the CQE.

The transaction layer of the first device invokes the WQE from the WQ, and sends the WQE to the transport layer of the first device. The WQ is a format of information exchanged between a software process and hardware logic. In the first device, the WQ is generated by software, and hardware obtains, parses, and performs corresponding data transmission on the WQ. On the second device side, hardware obtains the WQ, parses the WQ to store received data in a memory, and writes a completion queue element into a completion queue to notify the second process of the completion. The second process obtains the completion and performs subsequent processing. The transport layer provides end-to-end transmission services, supports single-path and multi-path transmission, and has end-to-end congestion control and packet order maintenance. In addition, the transmission services provided by the transport layer are classified into a reliable transmission service and an unreliable transmission service. The reliable service ensures that data is completely sent to a peer end. When a packet loss occurs in a network, the transport layer is responsible for retransmission. The unreliable service does not ensure data integrity.

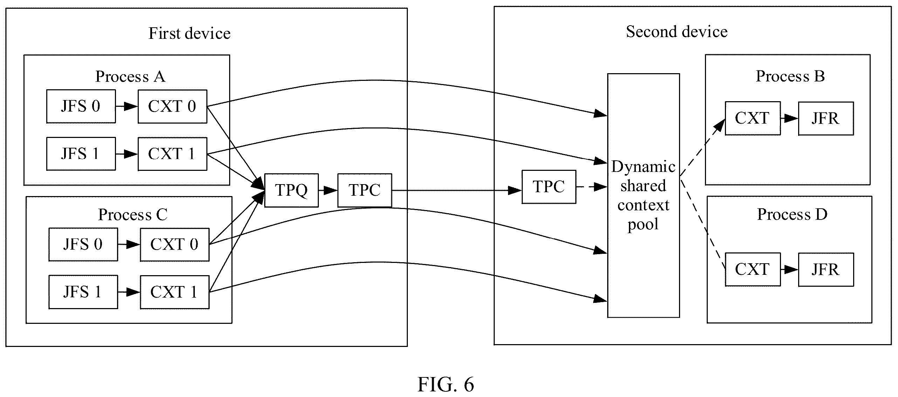

As shown in FIG. 6, the following describes a communication process between the process of the first device and the process of the second device with reference to FIG. 6. The first device includes a process A and a process C. The process A has a JFS 0 and a corresponding CXT 0 and a JFS 1 and a corresponding CXT 1. The process C has a JFS 0 and a corresponding CXT 0 and a JFS 1 and a corresponding CXT 1. Both the process A and the process C send data based on a transport queue TPQ and a transport context TPC. The second device includes a transport context, a dynamic shared context pool, a process B, and a process D. The process B and the process D respectively correspond to contexts CXTs and JFRs. The process A of the first device may set up a dynamic connection to the process B or the process D of the second device, and the process C of the first device may set up a dynamic connection to the process B or the process D of the second device. The dynamic connection may be dynamically set up and dynamically deleted. For example, the process A of the first device may dynamically send the connection identifier to the second device, so that the second device applies for a context from the dynamic shared context pool, and the context obtained through application may be provided for the process B or the process D. When the process A of the first device completes sending the data stream and no longer needs the dynamic connection, the first device may send a release packet to the second device. The second device releases the context obtained through application back to the dynamic shared context pool. The shared context in the dynamic shared context pool may be dynamically applied for and released.

An application of the first device sends data to the second device based on the JFS. For example, the process A sends a data stream 0 based on the JFS 0. When the first device sends data based on the JFS, if a JFS context (for example, the CXT 0 of the process A) does not include a sequence context identifier (Sequence Context ID, SCID) of the second device, a data segment in the data stream 0 is first sent, and a packet header in which the data segment is located carries an identifier for applying for the SCID. A shared SC (Sequence Context) pool is configured for the second device. The second device receives a packet that carries the identifier for applying for the SCID, determines that the first device needs to set up a dynamic connection, and applies for an idle SC from the shared SC pool. If the application succeeds, the second device notifies, based on a response packet, the first device of the SCID obtained through application. If the second device fails to obtain the SCID through application, the second device sends a response packet to notify the first device that the SCID fails to be obtained through application, but the data is successfully received. In this case, it is equivalent to that one data segment and an SSN of the data segment are sent in one round-trip time (round-trip time, RTT). The first device receives the response packet. If the response packet carries the SCID obtained through application, the first device stores the SCID in the JFS context (for example, the CXT 0 of the process A), and continuously sends subsequent data segments. A packet in which the data segment is located carries the SCID. If the second device fails to obtain the SCID through application, the first device sends another data segment, where the packet carries the identifier for applying for the SCID. When the second device fails to obtain the SCID through application, one data segment is transmitted in each RTT between the first device and the second device, and after the SCID is obtained through application, data segments are continuously sent.

The transport layer provides reliable transmission services, that is, if a packet loss occurs in the network, the transport layer is configured to retransmit a lost packet. The components of the transport layer include the transport queue TPQ and the transport context TPC. In a small-scale system (computing device cluster), for example, ports of two devices are directly connected, retransmission may not be performed at a transport layer, for example, retransmission is performed on a UB link, to ensure reliable data transmission. In this case, the components: the TPQ and the TPC of the transport layer are not required, and it is easier to implement a design and achieve high performance. Whether the transport layer exists is set based on actual networking requirements. In the UB, whether the transport layer exists is transparent to the application, that is, the application sends data through a JFS interface, and does not sense whether the transport layer exists. The transport layer may be used for a long time after being set up, and is not removed when the dynamic connection is disabled. When the first device and the second device do not need to transmit data, the transport connection to the second device may be disconnected.

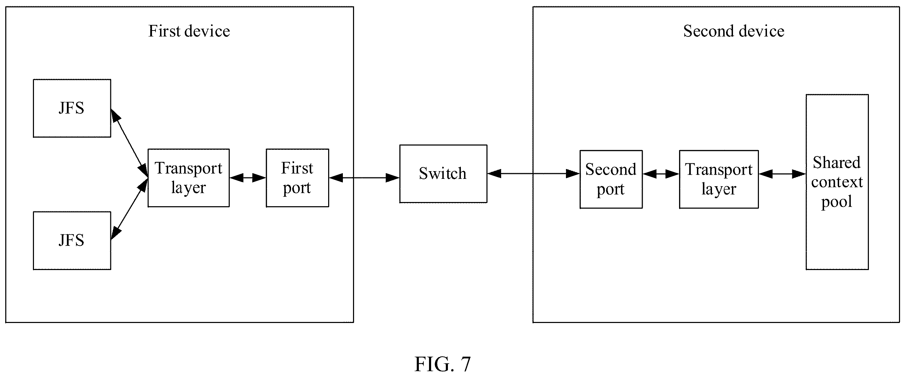

As shown in FIG. 7, the first device communicates with the second device by using a switch. The first device includes a JFS, a transport layer, and a first port, and the second device includes a second port, a transport layer, and a shared context pool. The first port of the first device is connected to the second port of the second device by using the switch.

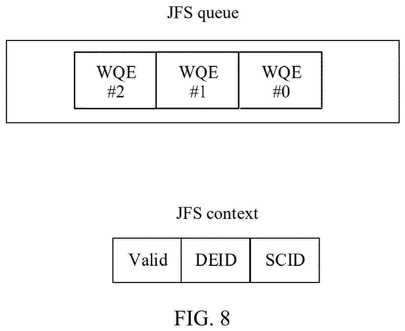

The JFS includes a JFS queue (JFS Queue) and a JFS context (JFS context). As shown in FIG. 8, the JFS queue includes three tasks: a WQE #0, a WQE #1, and a WQE #2. The three tasks are sent by an application program of the first device to the JFS queue. Each WQE carries information required for data transmission. For example, when data needs to be locally obtained during task execution, the WQE includes an address at which the data is locally stored. When data needs to be received from a peer end, the WQE includes an address at which the data is received from the peer end, a data length, a strict order (Strict Order, SO) indicating that the task needs to be executed in order, or a destination entity identifier DEID of the task.

The JFS context is used to record a status of data sent by the JFS, for example, a location of a data segment to be sent currently (which data segment is to be sent), a location of a data segment for which a response has been received (a specific data segment for which a response is received), a location of a segment for which a response is not received (a specific data segment for which a response is not received), a DEID, an SCID, or valid, where valid indicates whether a DEID field and an SCID field are valid. If the DEID and SCID are valid, it indicates that the JFS has obtained the SCID from an object indicated by the DEID. There is a transport TP connection between the first device and the second device. Multiple JFSs of the first device send packets through the TP connection. If a packet is discarded in a switch network, the packet is retransmitted through the TP connection, to ensure that the packet reliably arrives at the second device.

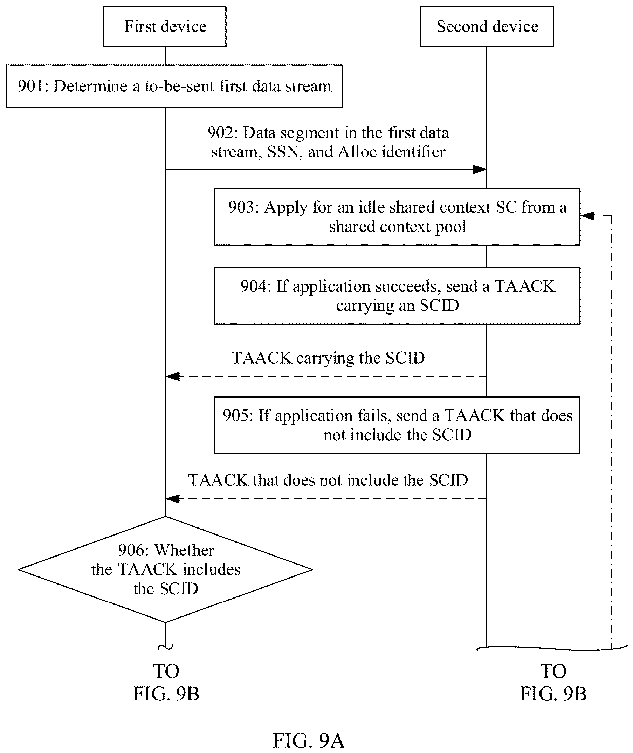

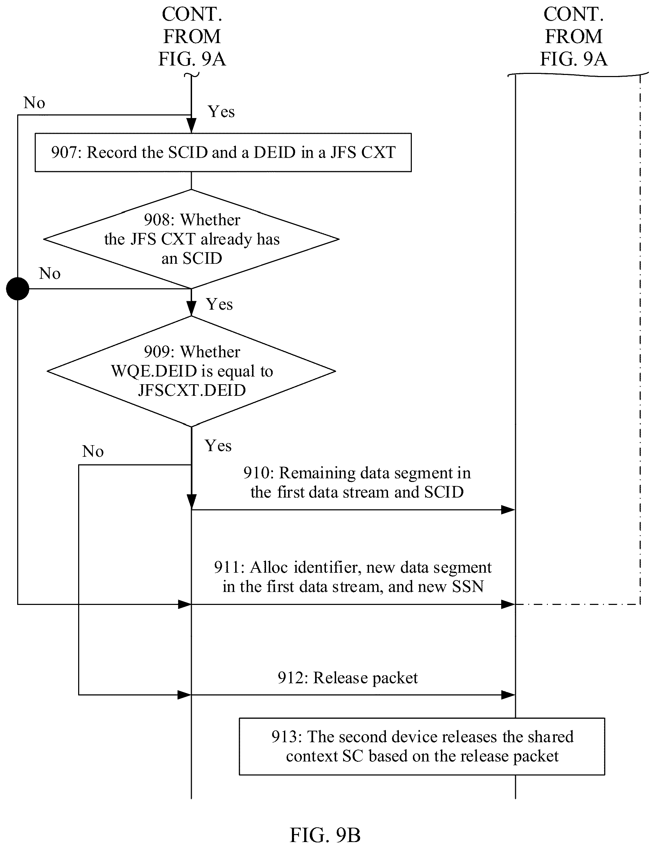

As shown in FIG. 9A and FIG. 9B, a procedure of communication interaction between the first device and the second device includes the following steps.

Step 901: A first device determines a to-be-sent first data stream.

Step 902: The first device sends one data segment in the first data stream, an SSN, and an Alloc identifier, and correspondingly, a second device receives the data segment in the first data stream, the SSN, and the Alloc identifier.

When sending a packet, a JFS of the first device finds that a DEID and an SCID in a JFS context are invalid, and sends a data segment that carries the SSN and the "Alloc" connection identifier. When a transport layer of the first device sends the data segment, only a 1^{st} packet carries the "Alloc" connection identifier.

Step 903: The second device applies for an idle shared context SC from a shared context pool.

The second device receives the packet, determines that a packet header has the "Alloc" connection identifier, and applies for an idle SC from the shared context pool.

Step 904: If the application succeeds, the second device sends a TAACK carrying the SCID, and correspondingly, the first device receives the TAACK.

If the application succeeds, the SSN in the packet header is recorded in the context obtained through application as an expected SSN (expect SSN, ESSN), and the TAACK is used to notify a source of the identifier SCID of the context obtained through application.

Step 905: If the application fails, the second device sends a TAACK that does not include the SCID, and correspondingly, the first device receives the TAACK.

If the application fails, the second device still receives the data segment, and notifies, based on the TAACK, the source that the SCID fails to be obtained through application. In this case, it is equivalent to that only one data segment is sent in one round-trip time.

Step 906: The first device determines whether the TAACK carries the SCID.

If the TAACK carries the SCID, step 907 is performed; or if the TAACK does not carry the SCID, step 911 is performed.

Step 907: The first device records the SCID and the DEID in the JFS context.

Step 908: The first device determines whether the JFS context already has the SCID.

If the JFS context already has the SCID, step 909 is performed; or if the JFS context does not have the SCID, step 912 is performed.

Step 909: The first device determines whether WQE.DEID is equal to JFS CXT.DEID.

If WQE.DEID is equal to JFS CXT.DEID, step 910 is performed; or if WQE.DEID is not equal to JFS CXT.DEID, step 912 is performed. In this step, the first device determines whether the DEID of the to-be-sent data segment is equal to the DEID recorded in the JFS context. The JFS of the first device receives the TAACK. If the TAACK carries the SCID, the SCID and the DEID are recorded in the JFS context, the SCID is carried when subsequent data segments in the first data stream are sent, and the data segments are continuously sent until WQE.DEID is not equal to JFS CXT.DEID. It indicates that a destination EID of a task is not equal to the destination DEID recorded in the JFS context, that is, sending of the data segments to the destination EID has completed.

Step 910: The first device continuously sends remaining data segments in the first data stream and the SCID, and correspondingly, the second device receives the remaining data segments in the first data stream and the SCID.

The second device receives the data segment carrying the SCID, indexes the SC based on the SCID, and compares the SSN of the data segment with SC.ESSN. If the SSN of the data segment is equal to SC.ESSN, a TAACK is returned; otherwise, the data segment is discarded, a TANAK is returned, and the first device retransmits the data segment. It may alternatively be determined whether the data segment carries an SO flag. Only a data segment carrying an SO flag can be compared with SC.ESSN. If the data segments are out of order, the data segments may be temporarily stored in an on-chip out-of-order cache. After being ordered, the segments with an SO are processed. Out-of-order segments without the SO may be processed first, and an SSN of an executed data segment is recorded.

Step 911: The first device sends the Alloc identifier, a new data segment in the first data stream, and a new SSN, and correspondingly, the second device receives the Alloc identifier, the new data segment in the first data stream, and the new SSN.

If the second device fails to obtain the SCID through application, the first device sends another data segment carrying the "Alloc" connection identifier.

After step 911 is performed, steps performed by the first device are similar to step 906 to step 910, and steps performed by the second device are equivalent to step 903 to step 905.

Step 912: The first device sends a release packet, and correspondingly, the second device receives the release packet.

When sending the packet, the JFS of the first device determines that WQE.DEID is not equal to JFS CXT.DEID, and sends the release packet DeAlloc after receiving a response for each data segment previously sent by the JFS.

Step 913: The second device releases the shared context SC based on the release packet.

The second device receives a DA SCID request (the release packet), and releases the corresponding SCID. The DA SCID request is generated by the JFS of the first device, and does not correspond to a JFS WQE. Therefore, after receiving a TPACK of the DA SCID packet, the transport layer of the first device directly ends the procedure, and does not need to send the TPACK to the JFS. When an SCID allocated by the second device is not used for a long time, the second device reclaims the SCID. When the second device receives a packet carrying an invalid SCID, for example, the SCID has been reclaimed or reallocated to another JFS, the second device discards the packet.

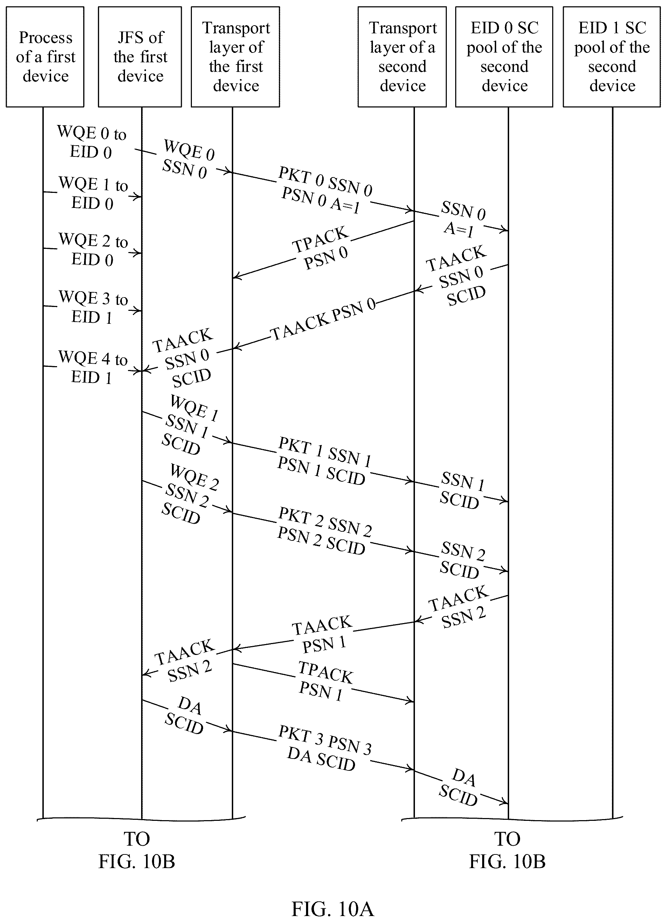

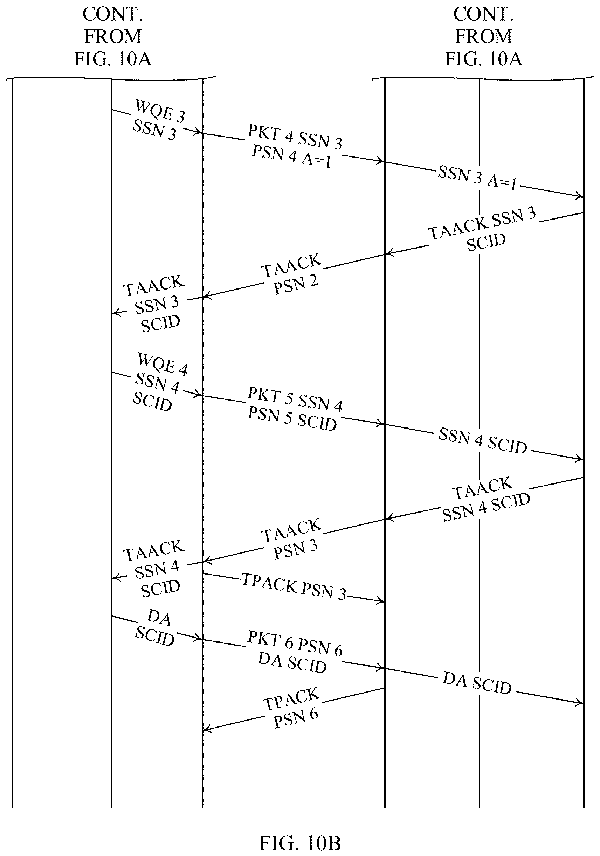

As shown in FIG. 10A and FIG. 10B, data streams are transmitted between the first device and the second device over transport layers.

A process (software) of the first device sends five WQEs, and each WQE has one data segment. The data segment may be carried in one or more packets when being sent by the transport layer of the first device. The following is described by using an example in which the data segment is carried in one packet. The five WQEs sent by the process of the first device are: a WQE 0, a WQE 1, a WQE 2, a WQE 3, and a WQE 4, where 0 to 4 are used to distinguish between different WQEs. "WQE 0 to EID 0" shown in the figure means that the WQE 0 is sent to an EID 0 of the second device. Similarly, "WQE 3 to EID 1" means that the WQE 3 is sent to an EID 1 of the second device. The WQE 0 to the WQE 2 are all sent to the EID 0 of the second device, and the WQE 3 and the WQE 4 are sent to the EID 1 of the second device. The JFS of the first device first sends the WQE 0, and does not send the WQE 1 to the WQE 4 temporarily, that is, the WQE 1 to the WQE 4 wait in a queue. The transport layer of the first device sends a PKT 0 (packet 0), where PKT represents a packet, and includes an SSN 0, a PSN 0, and A=1, the SSN 0 indicates an SSN corresponding to the WQE 0, the PSN 0 is a packet sequence number added when the transport layer of the first device sends the packet, and corresponds to the WQE 0, the PSN 0 may be used to enable the transport layer to implement a retransmission mechanism, and A=1 indicates to apply for a context. The transport layer of the second device receives the PKT 0, obtains the SSN 0, the PSN 0, and A=1, sends the SSN 0 and A=1 in the PKT 0 to an EID 0 SC pool of the second device, and returns a TPACK and the PSN 0, to indicate that the transport layer of the second device acknowledges that the packet with the PSN 0 is received (in this case, retransmission is not triggered). The EID 0 of the second device returns a TAACK including the SSN 0 and an SCID, to indicate the SCID obtained through application for the SSN 0. The TAACK returned by the EID 0 of the second device is sent to the transport layer of the second device, and the transport layer of the second device sends the TAACK and the PSN 0. The transport layer of the first device receives the TAACK and the PSN 0, and sends the TAACK and the SSN 0 and the SCID carried in the TAACK to the JFS of the first device (in this case, the JFS may also receive data). In this way, the first device sends a data segment in the WQE in one round-trip time, and receives the SCID.

Then, because both the WQE 1 and the WQE 2 are sent to the EID 0, the SCID is carried when the WQE 1 and the WQE 2 are sent. In other words, the JFS of the first device sends the WQE 1, an SSN 1, and the SCID, and after receiving the WQE 1, the SSN 1, and the SCID, the transport layer of the first device sends a packet 1 (PKT 1) including the SSN 1, a PSN 1, and the SCID, where the SSN 1 corresponds to the WQE 1, and the PSN 1 indicates a packet sequence number corresponding to the WQE 1. After receiving the packet, the transport layer of the second device sends the SSN 1 and the SCID in the packet to the EID 0 of the second device. The EID 0 of the second device determines, based on the SCID, the SC 0 that is previously obtained through application, and records the SSN 1 in the SC 0. In this case, the SC 0 includes the SSN 0 and the SSN 1. When sending the WQE 1, the first device may further continuously send the WQE 2 that passes through the transport layer of the first device (at which a packet PKT 2 carrying an SSN 2, a PSN 2, and the SCID is sent) and the transport layer of the second device. The EID 0 of the second device receives the SSN 2 and the SCID. The second device returns a TAACK and the SSN 2. In this case, to reduce a quantity of sent TAACKs, the second device may send a largest SSN after summarization; or feed back a TAACK for each SSN. The TAACK and the SSN 2 that is sent by the EID 0 of the second device is added with the PSN 1 by the transport layer of the second device, and then sent to the transport layer of the first device. The transport layer of the first device feeds back TPACK PSN 1 to acknowledge that the packet is received. The transport layer of the first device sends the TAACK and the SSN 2 to the first device, and the first device sends a DA SCID indicating to release of the SC 0. The transport layer of the first device sends a packet PKT 3 carrying a PSN 3 and the DA SCID. After receiving the packet, the transport layer of the second device sends the DA SCID to the EID 0, and the EID 0 releases the SC 0 back to the shared context pool.

The JFS of the first device continues to send the WQE 3 and an SSN 3. The transport layer of the first device includes the SSN 3, a PSN 4, and A=1 in a packet PKT 4, and sends the packet to the transport layer of the second device. The transport layer of the second device receives the packet, and sends the SSN 3 and A=1 to the EID 1 of the second device. The EID 1 of the second device applies for a context SC 1 from the dynamic shared context pool, and sends an SCID of the SC 1, the SSN 3, and a TAACK to the transport layer of the first device. The transport layer of the first device sends the TAACK and the PSN 2 to the transport layer of the first device. The transport layer of the first device feeds back a TPACK and the PSN 2, to indicate that the packet is correctly received. The transport layer of the first device sends the TAACK, the SSN 3, and the SCID corresponding to the SC 1 to the JFS of the first device. The JFS of the first device sends the WQE 4, an SSN 4, and the SCID. The transport layer of the first device sends a packet PKT 5 carrying the SSN 4, a PSN 5, and the SCID. After receiving the packet, the transport layer of the second device sends the SSN 4 and the SCID to the EID 1 of the second device. The EID 1 of the second device feeds back a TAACK, the SSN 4, and the SCID, and the transport layer of the second device sends the TAACK and the PSN 3. The transport layer of the first device feeds back a TPACK and the PSN 3, and the transport layer of the first device further sends a TAACK, the SSN 4, and the SCID to the JFS of the first device. The JFS of the first device sends a DA SCID, and the transport layer of the first device sends a packet PKT 6 carrying a PSN 6 and the DA SCID. After receiving the packet, the transport layer of the second device sends the DA SCID in the packet to the EID 1 of the second device. The EID 1 of the second device releases the corresponding SCID. As shown in the foregoing figure, the SCID provided by the EID 0 and the SCID provided by the EID 1 are different, and are used to identify different SCs.

The software delivers the five WQEs to the JFS. The first three WQEs are sent to the EID 0, and the last two WQEs are sent to the EID 1. Only one data packet is sent to the JFS in a 1^{st} RTT. A packet header carries an A (Alloc) flag, indicating to apply for an SC (Sequence Context) resource of the EID 0. The JFS obtains the SCID based on the TAACK and records the SCID in the JFS context. The JFS continuously sends the WQE 1 and the WQE 2 that carry the SCID. After receiving the packets, the EID 0 indexes the SC based on the SCID, and compares the SSNs, to implement destination ordering. The JFS parses the WQE 3, finds that WQE3.DEID is different from JFS context.DEID, and then sends a "DA SCID" command to the EID 0. The JFS sends the packet in the WQE 3 to the DEID, and a packet header carries an A (Alloc) flag, indicating to apply for an SC resource of the EID 1. The JFS obtains the SCID based on the TAACK and records the SCID in the JFS context. The JFS sends the WQE 4 carrying the SCID. After the JFS receives the TAACK for the WQE 4 and reports a CQE, if sending of the JFS is completed, the JFS sends a DA SCID command to the EID 1. In FIG. 10A and FIG. 10B, the EID 0 and the EID 1 belong to one device, and therefore are connected through a same TP. When the EID 0 and the EID 1 belong to different hosts, different TPs are used for connection.

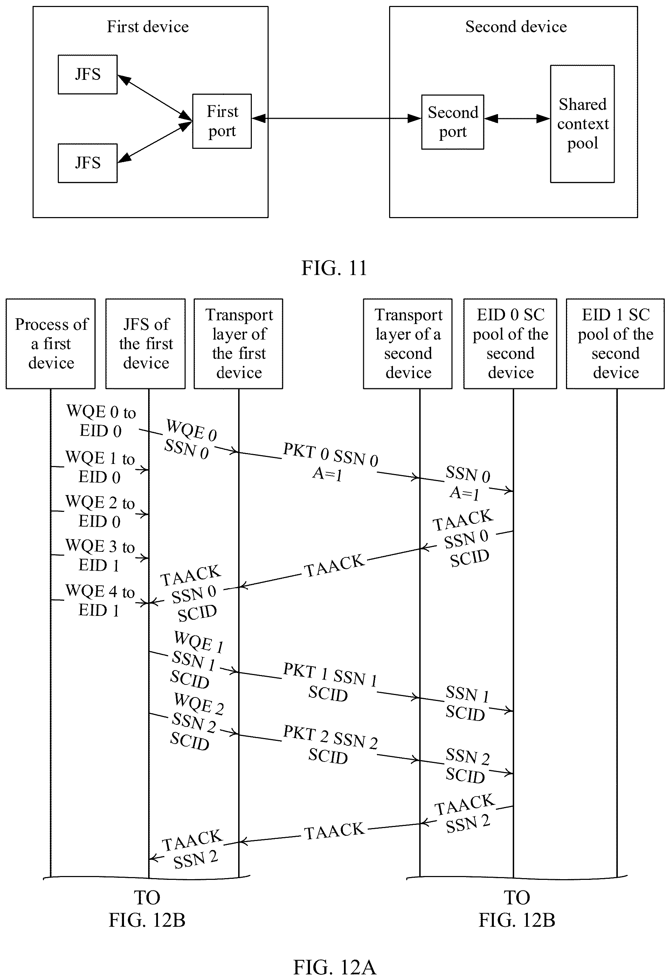

As shown in FIG. 11, a transport connection is not set up between the first device and the second device. The JFS of the first device sends data to a first port. After a second port of the second device receives the data, the second device applies for a context in the shared context pool, to record an SSN. After obtaining the context through application, the second device sends the context through the second port. The first device receives the context through the first port and transfers the context to the JFS. The first device directly communicates with the second device. When a packet is lost on a link between the first port and the second port, the lost packet is restored through retransmission on the link.

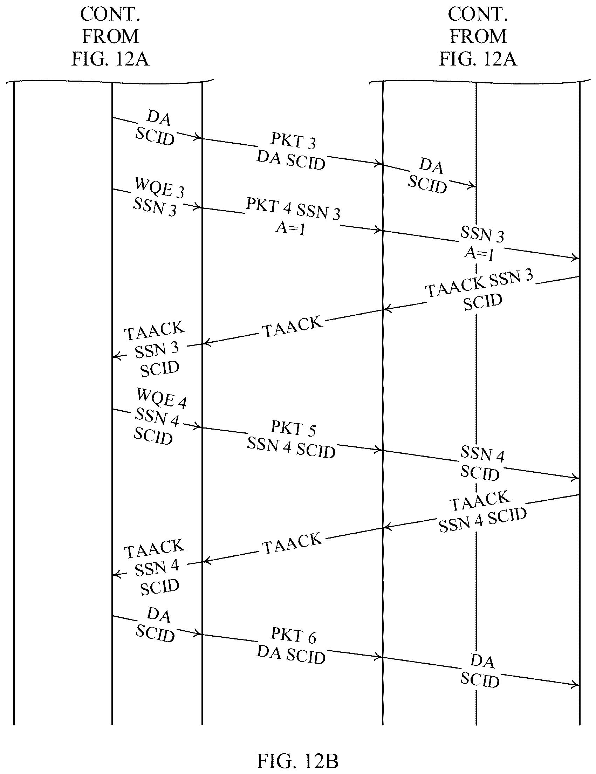

As shown in FIG. 12A and FIG. 12B, data streams are transmitted between the first device and the second device, and the transport layer may only forward data. If the first device and the second device are directly connected, data may be transmitted without a transport connection. Alternatively, even if there is a transport connection, the transport connection is used to only forward data, and does not perform retransmission control, congestion control, or the like. The application and JFS do not sense whether a TP connection exists.

Both FIG. 12A and FIG. 12B and FIG. 10A and FIG. 10B describe communication between the process of the first device, the JFS of the first device, the transport layer of the first device, the transport layer of the second device, the EID 0 of the second device, and the EID 1 of the second device in the process of sending the WQE 0 to the WQE 4. Main differences include: In FIG. 12A and FIG. 12B, the transport layer of the first device and the transport layer of the second device mainly forward data, the transport layer of the first device does not send a TPACK to the transport layer of the second device, the transport layer of the second device does not send a TPACK to the transport layer of the first device, a PSN is not added when a packet is transmitted between the transport layer of the first device and the transport layer of the second device, and a retransmission mechanism is not maintained.

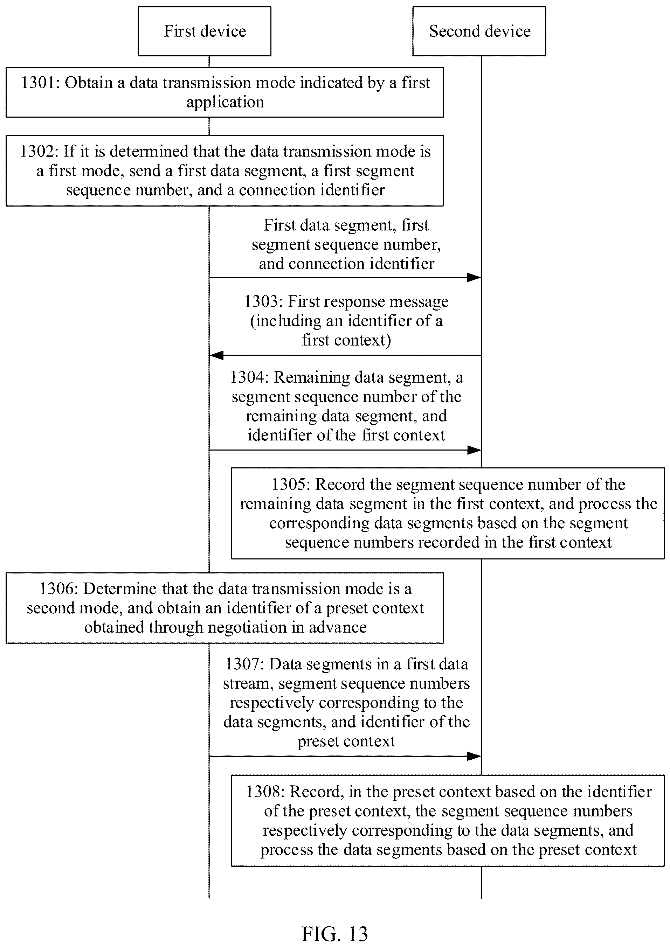

As shown in FIG. 13, the first device may determine, based on a data transmission mode, how to send the first data stream. FIG. 13 includes the following steps.

Step 1301: A first device obtains a data transmission mode indicated by a first application.

The first device configures, for each JFS, whether the JFS dynamically applies for releasing an SCID. A control plane configures an EID and an SCID of a second device in a JFS context. When sending a packet, a data plane does not dynamically apply for releasing the SCID, which is referred to as a static RS. When the application of the first device creates the JFS, a specified mode is a first mode or a second mode. The first mode may alternatively be a dynamic mode. In the dynamic mode, the first device temporarily applies to the second device for a first context. The second mode may be a static mode, and the JFS in the static mode can send data to only one fixed EID. The JFS in the static mode can continuously send data segments, and there is no restriction that only one data segment can be sent in a 1^{st} RTT. Different JFSs in the first device may work in different modes.

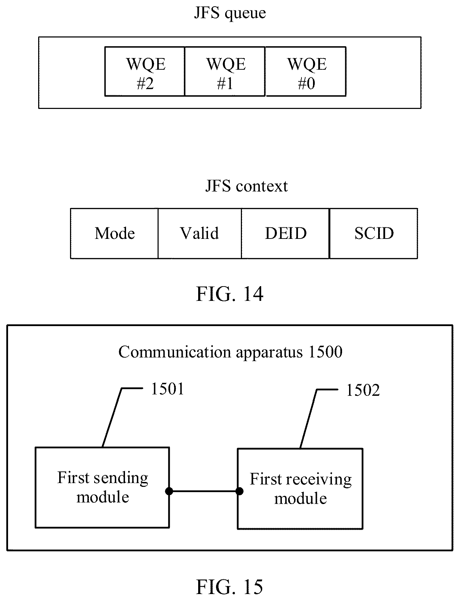

As shown in FIG. 14, the JFS context further includes a mode field. The JFS context includes the mode field. When the JFS is created, the mode field is used to specify whether the JFS works in a dynamic or static mode. When the static mode is configured, a management plane (which may be an independent control device that controls the first device and the second device) configures a correct DEID and SCID.

Step 1302: The first device determines that the data transmission mode is the first mode, and sends a first data segment, a first segment sequence number, and a connection identifier, and correspondingly, the second device receives the first data segment, the first segment sequence number, and the connection identifier.

Step 1303: The second device sends a first response message (including an identifier of the first context), and correspondingly, the first device receives the first response message.

The first response message includes the identifier of the first context, and the identifier of the first context is used to indicate a correspondence between the first context and a first data stream.

Step 1304: The first device sends a remaining data segment, a segment sequence number of the remaining data segment, and the identifier of the first context, and correspondingly, the second device receives the remaining data segment, the segment sequence number of the remaining data segment, and the identifier of the first context.

Step 1305: The second device records the segment sequence number of the remaining data segment in the first context, and processes the corresponding data segments based on the segment sequence numbers recorded in the first context.

Step 1306: The first device determines that the data transmission mode is the second mode, and obtains an identifier of a preset context obtained through negotiation in advance.

Step 1307: The first device sends data segments in the first data stream, segment sequence numbers respectively corresponding to the data segments, and the identifier of the preset context, and correspondingly, the second device receives the data segments in the first data stream, the segment sequence numbers respectively corresponding to the data segments, and the identifier of the preset context.

Step 1308: The second device records, in the preset context based on the identifier of the preset context, the segment sequence numbers respectively corresponding to the data segments, and processes the data segments based on the preset context.

The identifier of the preset context indicates a correspondence between the preset context and the first data stream, the preset context is a context obtained through negotiation with the second device in advance, and the preset context is used to record segment sequence numbers of multiple data segments in the first data stream.

As shown in FIG. 15, an embodiment of this application provides a communication apparatus 1500, including:
a first sending module 1501, configured to send a first data segment, a connection identifier, and a first segment sequence number, where the first data segment is a data segment in a first data stream, the connection identifier indicates a second device to apply for a first context, the first context is used to record the first segment sequence number, the first segment sequence number is a segment sequence number of the first data segment, and the second device is a device connected to a first device through a physical link; and
a first receiving module 1502, configured to receive a first response message, where the first response message is provided by the second device, the first response message includes first description information, and the first description information describes a correspondence between the first context and the first data stream.

In a possible implementation, the first sending module 1501 is further configured to: after receiving the first response message, send a release packet, where the release packet includes the first description information and a release identifier, and the release identifier indicates the second device to release the first context.

In a possible implementation, the first receiving module 1502 is further configured to: before receiving the first response message, receive a second response message, where the second response message is sent by the second device when the second device fails to obtain the first context through application, and the second response message does not include the first description information.

The first sending module 1501 is further configured to send a second data segment, the connection identifier, and a second segment sequence number, where the second data segment is an unsent data segment in the first data stream, the first context is further used to record the second segment sequence number, and the second segment sequence number is a segment sequence number of the second data segment.

In a possible implementation, the communication apparatus 1500 further includes a processing module. The processing module is configured to: before sending the first data segment, the connection identifier, and the first segment sequence number, set up a reliable transport connection, where the reliable transport connection is a reliable connection between a transport layer of the first device and a transport layer of the second device, and the reliable transport connection is used to send the first data segment, the connection identifier, and the first segment sequence number or receive the first response message.

In a possible implementation, the first device includes a transaction layer used to transfer data to the transport layer of the first device, the data transferred by the transaction layer to the transport layer of the first device includes the first data segment, the connection identifier, and the first segment sequence number, the transport layer of the first device is configured to include the first data segment, the connection identifier, and the first segment sequence number in multiple first packets, and there is one packet in the multiple first packet includes the connection identifier.

In a possible implementation, the first device includes multiple first ports, the multiple first ports are separately connected to second ports of the second device through different transmission paths, the multiple transmission paths include a first transmission path, and the first transmission path is used to send the first data segment, the connection identifier, and the first segment sequence number or receive the first response message.

In a possible implementation, multiple processes of the first device include one first process, the first process is used to send the first data stream to a second process, and the second process is a process of the second device.

In a possible implementation, the communication apparatus 1500 further includes the processing module, and the processing module is configured to:
determine a data transmission mode indicated by a first application of the first device; and
if the data transmission mode is a first mode, perform the step of sending the first data segment; or
if the data transmission mode is a second mode, send the first data stream based on second description information, where the second description information describes a correspondence between a preset context and the first data stream, the preset context is a context obtained through negotiation with the second device in advance, and the preset context is used to record segment sequence numbers of multiple data segments in the first data stream.

In a possible implementation, at least one data segment in the first data stream is carried in a packet with a strict order, and the strict order indicates the second device to process the data segment based on a segment sequence number included in the packet.

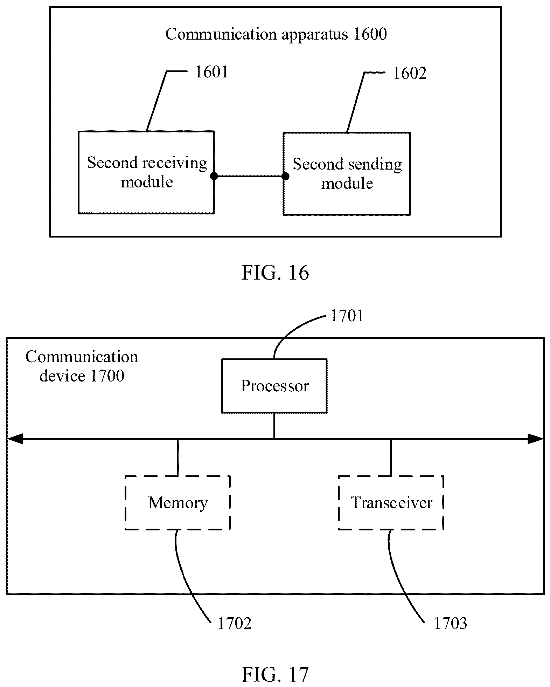

As shown in FIG. 16, an embodiment of this application provides a communication apparatus 1600, including:
a second receiving module 1601, configured to receive a first data segment, a connection identifier, and a first segment sequence number, where the first data segment is a data segment in a first data stream, the connection identifier indicates a second device to apply for a first context, the first context is used to record the first segment sequence number, the first segment sequence number is a segment sequence number of the first data segment, and a first device is a device connected to the second device through a physical link; and
a second sending module 1602, configured to send a first response message, where the first response message includes first description information, and the first description information describes a correspondence between the first context and the first data stream.

In a possible implementation, the second receiving module 1601 is further configured to: after sending the first response message, the method further includes:
receive a release packet, where the release packet includes the first description information and a release identifier.

The communication apparatus 1600 further includes a processing module, configured to release the first context based on the first description information and the release identifier.

In a possible implementation, the communication apparatus 1600 further includes the processing module, configured to: after sending the first response message, if the first context is not used after timeout, release the first context.

In a possible implementation, the second sending module 1602 is configured to: before sending the first response message, the method further includes: send a second response message, where the second response message is sent by the second device when the second device fails to obtain the first context through application, and the second response message does not include the first description information.

The second receiving module 1601 is further configured to receive a second data segment, the connection identifier, and a second segment sequence number, where the second data segment is an unreceived data segment in the first data stream, the first context is further used to record the second segment sequence number, and the second segment sequence number is a segment sequence number of the second data segment.

In a possible implementation, the communication apparatus 1600 further includes the processing module, configured to: before receiving the first data segment, set up a reliable transport connection, where the reliable transport connection is a reliable connection between a transport layer of the first device and a transport layer of the second device, and the reliable transport connection is used to receive the first data segment, the connection identifier, and the first segment sequence number or send the first response message.

In a possible implementation, the transport layer of the second device is configured to receive multiple first packets, and send the first data segment, the connection identifier, and the first segment sequence number that are included in the multiple first packets to a transaction layer of the second device, where there is one packet in the multiple first packet includes the connection identifier.

In a possible implementation, the second device includes multiple second ports, the multiple second ports are separately connected to first ports of the first device through transmission paths, the multiple transmission paths include a first transmission path, and the first transmission path is used to receive the first data segment, the connection identifier, and the first segment sequence number or send the first response message.

In a possible implementation, multiple processes of the second device include one second process, the second process is used to receive the first data stream from a first process, and the first process is a process of the first device.

In a possible implementation, at least one data segment in the first data stream is carried in a packet with a strict order, and the strict order indicates the second device to process the data segment based on a segment sequence number of the data segment in the packet.

As shown in FIG. 17, an embodiment of this application provides a communication device. Refer to FIG. 17. The computer device 1700 includes a processor 1701, a memory 1702, and a transceiver 1703 that are connected through a bus.

An embodiment of this application further provides a computer program product including computer instructions. When the computer program product runs on a computer, the computer is enabled to perform the method in the foregoing embodiments.

An embodiment of this application further provides a computer-readable storage medium, including computer instructions. When the computer instructions are run on a computer, the computer is enabled to perform the method in the foregoing embodiments.

An embodiment of this application further provides a chip apparatus, including a processor, configured to invoke a computer program or computer instructions in a memory, to enable the processor to perform the method in the foregoing embodiments.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control execution of a program of the method in the foregoing embodiments. The memory mentioned anywhere above may be a read-only memory (read-only memory, ROM), another type of static storage device that can store static information and instructions, a random access memory (random access memory, RAM), or the like.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, multiple units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

The units described as separate parts may or may not be physically separate, and parts displayed as units may or may not be physical units, in other words, may be located in one position, or may be distributed on multiple network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, a part, essentially making a contribution, of the technical solutions of this application, or some or all of the technical solutions may be implemented in a form of a software product. The computer software product is stored in a storage medium, and includes several instructions for instructing a computer device to perform all or some of the steps of the methods described in embodiments of this application.

The foregoing embodiments are merely intended for describing the technical solutions of this application, rather than limiting this application. Although this application is described in detail with reference to the foregoing embodiments, a person of ordinary skill in the art should understand that modifications may still be made to the technical solutions described in the foregoing embodiments or equivalent replacements are made to some technical features thereof, without departing from the scope of the technical solutions of embodiments of this application.

## Claims

1. A communication method, applied to a first device, wherein the method comprises:
sending a first data segment, a connection identifier, and a first segment sequence number, wherein the first data segment is a data segment in a first data stream, the connection identifier indicates a second device to apply for a first context, the first context is used to record the first segment sequence number, the first segment sequence number is a segment sequence number of the first data segment, and the second device is a device connected to the first device through a physical link; and
receiving a first response message, wherein the first response message is provided by the second device, the first response message comprises first description information, and the first description information describes a correspondence between the first context and the first data stream.

2. The method according to claim 1, wherein after the receiving the first response message, the method further comprises:
sending a release packet, wherein the release packet comprises the first description information and a release identifier, and the release identifier indicates the second device to release the first context.

3. The method according to claim 1, wherein before the receiving the first response message, the method further comprises:
receiving a second response message, wherein the second response message is sent by the second device when the second device fails to obtain the first context through application, and the second response message does not comprise the first description information; and
sending a second data segment, the connection identifier, and a second segment sequence number, wherein the second data segment is an unsent data segment in the first data stream, the first context is further used to record the second segment sequence number, and the second segment sequence number is a segment sequence number of the second data segment.

4. The method according to any one of claims 1 to 3, wherein before the sending the first data segment, the connection identifier, and the first segment sequence number, the method further comprises:
setting up a reliable transport connection, wherein the reliable transport connection is a reliable connection between a transport layer of the first device and a transport layer of the second device, and the reliable transport connection is used to send the first data segment, the connection identifier, and the first segment sequence number or receive the first response message.

5. The method according to claim 4, wherein the first device comprises a transaction layer used to transfer data to the transport layer of the first device, the data transferred by the transaction layer to the transport layer of the first device comprises the first data segment, the connection identifier, and the first segment sequence number, the transport layer of the first device is used to comprise the first data segment, the connection identifier, and the first segment sequence number in multiple first packets, and there is one packet in the multiple first packet comprises the connection identifier.

6. The method according to any one of claims 1 to 5, wherein the first device comprises multiple first ports, the multiple first ports are separately connected to second ports of the second device through different transmission paths, the multiple transmission paths comprise a first transmission path, and the first transmission path is used to send the first data segment, the connection identifier, and the first segment sequence number or receive the first response message.

7. The method according to any one of claims 1 to 6, wherein the method further comprises:
determining a data transmission mode indicated by a first application of the first device; and
if the data transmission mode is a first mode, performing the step of sending the first data segment; or
if the data transmission mode is a second mode, sending the first data stream based on second description information, wherein the second description information describes a correspondence between a preset context and the first data stream, the preset context is a context obtained through negotiation with the second device in advance, and the preset context is used to record segment sequence numbers of multiple data segments in the first data stream.

8. The method according to any one of claims 1 to 7, wherein at least one data segment in the first data stream is carried in a packet with a strict order, and the strict order indicates the second device to process the data segment based on a segment sequence number comprised in the packet.

9. A communication method, applied to a second device, wherein the method comprises:
receiving a first data segment, a connection identifier, and a first segment sequence number, wherein the first data segment is a data segment in a first data stream, the connection identifier indicates the second device to apply for a first context, the first context is used to record the first segment sequence number, the first segment sequence number is a segment sequence number of the first data segment, and a first device is a device connected to the second device through a physical link; and
sending a first response message, wherein the first response message comprises first description information, and the first description information describes a correspondence between the first context and the first data stream.

10. The method according to claim 9, wherein after the sending the first response message, the method further comprises:
receiving a release packet, wherein the release packet comprises the first description information and a release identifier; and
releasing the first context based on the first description information and the release identifier.

11. The method according to any claim 9 or 10 , wherein before the sending the first response message, the method further comprises:
sending a second response message, wherein the second response message is sent by the second device when the second device fails to obtain the first context through application, and the second response message does not comprise the first description information; and
receiving a second data segment, the connection identifier, and a second segment sequence number, wherein the second data segment is an unreceived data segment in the first data stream, the first context is further used to record the second segment sequence number, and the second segment sequence number is a segment sequence number of the second data segment.

12. A communication apparatus, comprising:
a processor; and
a memory, wherein the memory is coupled to the processor, the memory is configured to store program instructions, and when the program instructions are executed on the processor, the method according to any one of claims 1 to 11 is implemented.

13. A computer-readable storage medium, wherein the computer-readable storage medium stores a computer program or instructions, and when the computer program or the instructions are executed by a processor, the method according to any one of claims 1 to 11 is implemented.

14. A computer program product, comprising a computer program or instructions, wherein when the computer program or the instructions are executed by a computer, the method according to any one of claims 1 to 11 is implemented.

15. A computing device cluster, comprising:
a first device, wherein the first device is configured to implement the method according to any one of claims 1 to 8; and
a second device, connected to the first device, wherein the second device is configured to implement the method according to any one of claims 9 to 11.
